(19) Europäisches Patentamt / European Patent Office / Office européen des brevets

(11) **EP 2 836 038 A1**

(12) **EUROPEAN PATENT APPLICATION**
published in accordance with Art. 153(4) EPC

(43) Date of publication:
**11.02.2015 Bulletin 2015/07**

(21) Application number: **12874562.7**

(22) Date of filing: **20.04.2012**

(51) Int Cl.:
**H04W 72/04** (2009.01)  **H04W 24/02** (2009.01)

(86) International application number:
**PCT/CN2012/074465**

(87) International publication number:
**WO 2013/155710 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.
Shenzhen, Guangdong 518129 (CN)**

(72) Inventors:
• **YANG, Jianbing
  Shenzhen
  Guangdong 518129 (CN)**
• **LI, Yang
  Shenzhen
  Guangdong 518129 (CN)**

• **CHENG, Xingqing
  Shenzhen
  Guangdong 518129 (CN)**
• **XUE, Lixia
  Shenzhen
  Guangdong 518129 (CN)**
• **DAI, Xizeng
  Shenzhen
  Guangdong 518129 (CN)**
• **WU, Zuomin
  Shenzhen
  Guangdong 518129 (CN)**

(74) Representative: **Epping - Hermann - Fischer
Patentanwaltsgesellschaft mbH
Schloßschmidstraße 5
80639 München (DE)**

(54) **PILOT SIGNAL SENDING METHOD AND RECEIVING METHOD, USER EQUIPMENT, AND BASE STATION**

(57) Embodiments of the present invention provide a method for transmitting a pilot signal, a method for receiving a pilot signal, a user equipment (UE), and a base station. A method includes: determining a first downlink subframe according to an uplink and downlink ratio relationship, where the first downlink subframe is a first downlink subframe after a transition from uplink to downlink; transmitting a pilot signal to a UE in the first downlink subframe. Another method includes: determining, according to a preset transmit period and a subframe offset number, a second downlink subframe for transmitting a pilot signal, and transmitting the pilot signal to a UE in the second downlink subframe. According to the technical solution of the present invention, time domain resources occupied by a pilot signal are reduced, therefore, the overhead of transmitting the pilot signal is reduced.

determining a first downlink subframe for transmitting a pilot signal according to an uplink and downlink ratio relationship, where the first downlink subframe is a first downlink subframe after a transition from uplink-receiving to downlink-transmitting — 101

↓

transmitting the pilot signal to a UE in the first downlink subframe — 102

FIG. 1

EP 2 836 038 A1

**Description**

**TECHNICAL FIELD**

Embodiments of the present invention relate to communication technologies and, in particular, to a method for transmitting a pilot signal, a method for receiving a pilot signal, a user equipment, and a base station.

**BACKGROUND**

In a long term evolution (Long Term Evolution, LTE) system, a user equipment (User Equipment, UE) performs a frequency tracking and a timing synchronization according to a common reference pilot signal (Common Reference Signal, CRS). Additionally, in versions Rel8 and 9 of the LTE, a UE takes the CRS as demodulation pilots to perform channel demodulation; in versions after Rel9, a UE uses a demodulation reference pilot signal (Demodulation Reference Signal, DMRS) to perform data channel demodulation, and uses the CRS to perform demodulation on a common channel and a physical downlink control channel (Physical Downlink Control Channel, PDCCH).

In order to meet the demand for high-speed mobile environment, the CRS and/or the DMRS is transmitted in each downlink subframe in the LTE system, and is also transmitted on all the resource blocks (Resource Block, RB) of an orthogonal frequency division multiplexing symbol with the CRS and/or the DRMS, and density of the CRS and/or DMRS is relatively big on a RB; for example, pilot density of the CRS is 0.0476 when there is one antenna port, is 0.0952 when there are two antenna ports, and is 0.1428 when there are four antenna ports; pilot density of the DMRS is 0.0833 when there is one or two antenna ports, and is 0.1666 when there are 3~8 antenna ports. Thus, it can be seen that, the overhead of the existing CRS and/or DMRS is relatively big, while as for some service environments with slow channel change such as environments which are similar to indoor environments, if the pilot signal is transmitted by continuously using the manner for transmitting the CRS and/or DMRS for high-speed mobile environment in the current LTE system, improvements of spectral efficiency will be affected, thereby resulting in a waste of resources.

**SUMMARY**

The present invention provides a method for transmitting a pilot signal, a method for receiving a pilot signal, a user equipment, and a base station, so as to reduce the pilot overhead.

In one aspect, the present invention provides a method for transmitting a pilot signal, including:

determining a first downlink subframe for transmitting a pilot signal according to an uplink and downlink ratio relationship, where the first downlink subframe is a first downlink subframe after a transition from uplink-receiving to downlink-transmitting; and
transmitting the pilot signal to a user equipment (UE) in the first downlink subframe.

In one aspect, the present invention provides a base station, including:

a first processing module, configured to determine a first downlink subframe for transmitting a pilot signal according to an uplink and downlink ratio relationship, where the first downlink subframe is a first downlink subframe after a transition from uplink-receiving to downlink-transmitting; and
a first transmitting module, configured to transmit the pilot signal to a user equipment (UE) in the first downlink subframe.

In one aspect, the present invention provides a method for receiving a pilot signal, including:

determining a third downlink subframe for receiving a pilot signal according to an uplink and downlink ratio relationship, where the third downlink subframe is a first downlink subframe after a transition from uplink-receiving to downlink-transmitting; and
receiving the pilot signal, which is transmitted by a base station, in the third downlink subframe.

In one aspect, the present invention provides a user equipment, including:

a third processing module, configured to determine a third downlink subframe for receiving a pilot signal according to an uplink and downlink ratio relationship, where the third downlink subframe is a first downlink subframe after a transition from uplink-receiving to downlink-transmitting; and
a second receiving module, configured to receive the pilot signal, which is transmitted by a base station, in the third downlink subframe.

In another aspect, the present invention provides a method for transmitting a pilot signal, including:

determining, according to a preset transmit period and a subframe offset number, a second downlink subframe for transmitting a pilot signal; and
transmitting the pilot signal to a user equipment (UE) in the second downlink subframe.

In another aspect, the present invention provides a base station, including:

a second processing module, configured to determine, according to a preset transmit period and a subframe offset number, a second downlink subframe for transmitting a pilot signal; and
a second transmitting module, configured to transmit the pilot signal to a user equipment (UE) in the second downlink subframe.

In another aspect, the present invention provides a method for receiving a pilot signal, including:

determining, according to a preset transmit period and a subframe offset number, a fourth downlink subframe for receiving a pilot signal; and
receiving the pilot signal, which is transmitted by a base station, in the fourth downlink subframe.

In another aspect, the present invention provides a user equipment, including:

a fourth processing module, configured to determine, according to a preset transmit period and a subframe offset number, a fourth downlink subframe for receiving a pilot signal; and
a fourth receiving module, configured to receive the pilot signal, which is transmitted by a base station, in the fourth downlink subframe.

The present invention provides a method for transmitting a pilot signal, a method for receiving a pilot signal, a user equipment, and a base station in one aspect, in which, a first downlink subframe after a transition from the uplink to the downlink is determined according to an uplink and downlink ratio relationship, and a pilot signal is transmitted to a UE in the determined first downlink subframe instead of being transmitted to the UE in each downlink subframe, and the UE receives the pilot signal in the determined downlink subframe, thus time domain resources occupied by a pilot signal are reduced, and overhead of transmitting the pilot signal is reduced.

The present invention provides a method for transmitting a pilot signal, a method for receiving a pilot signal, a user equipment, and a base station in another aspect, in which, a downlink subframe for transmitting a pilot signal is determined according to a preset transmit period and a subframe offset number, and then the base station transmits the pilot signal to a UE in the determined downlink subframe, that is, a pilot signal is transmitted to the UE periodically, instead of being transmitted to the UE in each subframe, and the UE receives the pilot signal in the determined downlink subframe, thus time domain resources occupied by a pilot signal are reduced, and overhead of transmitting the pilot signal is reduced.

## BRIEF DESCRIPTION OF DRAWINGS

In order to make the technical solutions in embodiments of the present invention or the prior art more clearly, the accompanying drawings used in the description of embodiments of the present invention or the prior art are briefly described hereunder. Obviously, the described drawings are merely some embodiments of present invention. For persons skilled in the art, other drawings may be obtained based on these drawings without any creative efforts.

FIG. 1 is a flowchart of a method for transmitting a pilot signal according to an embodiment of the present invention;
FIG. 2 is a flowchart of a method for transmitting a pilot signal according to another embodiment of the present invention;
FIG. 3A~FIG. 3E are schematic diagrams of pilot patterns corresponding to various manners of transmitting a pilot signal according to an embodiment of the present invention;
FIG. 4 is a schematic structural diagram of a base station according to an embodiment of the present invention;
FIG. 5 is a schematic structural diagram of a base station according to another embodiment of the present invention;
FIG. 6 is a flowchart of a method for receiving a pilot signal according to an embodiment of the present invention;
FIG. 7 is a flowchart of a method for receiving a pilot signal according to another embodiment of the present invention;

FIG. 8 is a schematic structural diagram of a UE according to an embodiment of the present invention;
FIG. 9 is a schematic structural diagram of a UE according to another embodiment of the present invention.

**DESCRIPTION OF EMBODIMENTS**

In order to make objectives, technical solutions, and advantages of embodiments of the present invention more clearly, the technical solutions in embodiments of the present invention are hereinafter described clearly and completely with reference to accompanying drawings in embodiments of the present invention. Obviously, the described embodiments are only a part of embodiments of the present invention, rather than all embodiments of the present invention. All the other embodiments obtained by persons of ordinary skill in the art based on embodiments of the present invention without any creative efforts shall fall within the protection scope of the present invention.

In the existing LTE system, the manner of transmitting various pilot signals mainly aim to meet requirements for high-speed mobile. However, with the growing requirements for wireless data traffic and the widely coverage of traditional cellular mobile communications, the design goal of high mobility has been unable to meet the requirements. According to statistics, 80% of data services occur indoor or in an environment with a relatively stable channel, where main characteristics of a hotspot small-scale or indoor channel lie in that a terminal moves slowly or is stationary, the surroundings are relatively stable, coverage of a base station are small and has less interference, and a UE can obtain a higher SINR, that is, a higher MCS and the like can be scheduled. As for a scenario with slow channel change, since the channel is relatively stable, multiple consecutive subframes can share a channel estimated by one subframe, and it is not necessary to perform the channel estimation for pilots of each subframe, and other subframes may compensate for the changes of the channel by using a small amount of pilot signals used for synchronization and timing; based on the described above, if the pilots are still transmitted by using the pilot pattern in the prior art which is designed for the high-speed mobile environment, a waste of resources will be incurred, and the overhead is large.

Additionally, in a future design of carrier aggregation, a main carrier is used for transferring data and a control signaling, a subcarrier is used for transferring data, and a NCT scheme will be used. Design features of this scheme mainly lie in that: frequency tracking and timing synchronization are tracked by using a periodically-transmitted CRS, and density of time-frequency domain is relatively small; a DMRS is used for demodulation. Thus, it can be seen that, besides the scenario with slow channel changes, densities of time-frequency domain of pilot signals used for the carrier aggregation are relatively small, if the pilots are still transmitted by using the pilot pattern in the prior art which is designed for the high-speed mobile environment, a waste of resources will also be incurred, and the overhead is large.

Embodiments of the present invention hereafter are mainly solutions provided for the above problems. In each embodiment of the present invention hereafter, the pilot signal may be a CRS, a DMRS, etc., and may also be a pilot signal dedicated for frequency tracking and timing synchronization, which is known as a TRS. In each embodiment of the present invention hereafter, the executive entity is a base station, for example, may be a base station (NodeB) in the LTE system or an evolved base station (e-NodeB), but is not limited thereto. Each embodiment of the present invention hereafter may be applied in various systems requiring reduction of pilot overhead, for example, carrier aggregation technologies, a wideband code division multiple access (Wideband Code Division Multiple Access, WCDMA) system, etc.

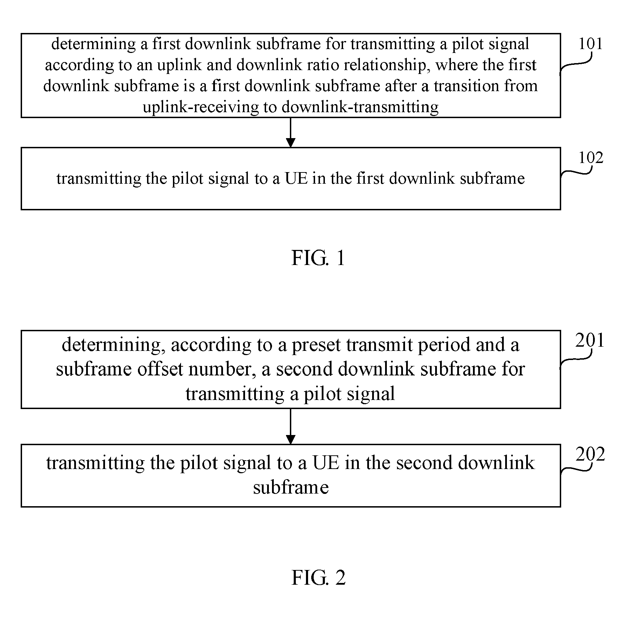

FIG. 1 is a flowchart of a method for transmitting a pilot signal according to an embodiment of the present invention. As shown in FIG. 1, the method in this embodiment includes:

Step 101, determining a first downlink subframe for transmitting a pilot signal according to an uplink and downlink ratio relationship, where the first downlink subframe is a first downlink subframe after a transition from uplink-receiving to downlink-transmitting.

Step 102, transmitting the pilot signal to a UE in the first downlink subframe.

This embodiment applies to a time division duplexing (Time Division Duplexing, TDD) mode.

In this embodiment, the uplink and downlink ratio relationship includes the configuration relationship between the uplink subframe and the downlink subframe in a radio frame, for example, which subframe is the downlink subframe, which subframe is the uplink subframe, a ratio relationship between the uplink subframe and the downlink subframe, etc, and also includes uplink and downlink ratio values corresponding to each configuration relationship, for example, may be currently-existed ratio values of 0-6, but are not limited thereto. Reference may be made to subsequent Table 2 for configuration relationships between the uplink subframe and the downlink subframe corresponding to the current uplink and downlink ratios of 0-6, respectively.

The uplink and downlink ratio relationship in this embodiment may be fixed, and may also be dynamically configured. Based on a situation that the uplink and downlink ratio relationship is dynamically configured, the method according to this embodiment may include an operation of configuring the uplink and downlink ratio relationship before step 101. When configuring the uplink and downlink ratio relationship, other subframes which are not downlink subframes in a radio frame may be configured as downlink subframes. As for other subframes which are configured dynamically, an uplink subframe close to a downlink subframe may be selected preferably. Taking the uplink and downlink ratio being 0 as an example, uplink subframes and downlink subframes in a radio frame are allowed to be configured dynamically. Currently, when the uplink and downlink ratio is 0, downlink subframes in a radio frame are subframes of which the system frame numbers are 0 and 5 respectively, when the dynamical configuration is performed, uplink subframes of which the system frame numbers are 4 and/or 9 may be selected preferably, and the subframes of which the system frame numbers are 4 and/or 9 are configured as downlink subframes. The subframe of which the system frame number is 4 is a subframe close to the downlink subframe of which the system frame number is 5, and the subframe of which the system frame number is 9 is a subframe close to the downlink subframe of which the system frame number is 0.

In this embodiment, a base station determines the first downlink subframe being after the transition from uplink-receiving to downlink-transmitting according to the uplink and downlink ratio relationship, and transmits a pilot signal to the UE in the first downlink subframe, as for a scenario in which the channel state changes slowly or a scenario in which the requirements for the density of transmitting the pilot signal are relatively small (for example, carrier aggregation technologies), the requirements such as using the pilot signal to perform data demodulation, frequency tracking, timing synchronization and the like can be satisfied; compared to the prior art that each subframe transmits the pilot signal, the number of times for transmitting the pilot signals is reduced, time domain resources occupied by the pilot signals are reduced, and overhead of transmitting the pilot signals is reduced.

Optionally, in the above method, besides transmitting the pilot signal to the UE in the first downlink subframe, a pilot signal may also be transmitted to the UE in at least one other downlink subframe in addition to the first downlink subframe, and then a further compensation is made through the pilot signal transmitted in the other downlink subframes. For example, taking the uplink and downlink ratio being 3 and subframes of which the system frame number are 0 and 5 being the first downlink subframes after the transition from uplink-receiving to downlink-transmitting as an example, besides that pilot signals can be transmitted in the downlink subframes of which the system frame number are 0 and 5, pilot signals can also be transmitted in a certain or several downlink subframes of which the system frame number are 6, 7, 8, and 9.

Optionally, an implementation of step 202 is: the base station may transmit the pilot signal to the UE in all RBs or a part of RBs of the first downlink subframe. The part of RBs may be a portion of all the RBs.

Specifically, the base station may transmit the pilot signal to the UE on all RBs of at least one OFDM symbol in the first downlink subframe. Or, the base station may transmit the pilot signal to the UE in a part of RBs of each of the at least one OFDM symbol in the first downlink subframe.

For instance, the base station may transmit the pilot signal to the UE in all RBs of 1 or 4 OFDM symbols in the first downlink subframe, i.e., transmitting the pilot signal to the UE in all RBs of each OFDM symbol in the 1 or 4 OFDM symbols.

For example, the base station may transmit the pilot signal to the UE in all RBs of 1 OFDM symbol in the first downlink sub frame, and transmit the pilot signal to the UE in a part of RBs of other 3 OFDM symbols in the first downlink subframe.

For example, the base station may transmit the pilot signal to the UE in a part of RBs of 1 or 4 OFDM symbols in the first downlink subframe, i.e., transmit the pilot signal to the UE in a part of RBs of each OFDM symbol in 1 or 4 OFDM symbols.

Optionally, the implementation of transmitting the pilot signal to the UE in the at least one other downlink subframe in addition to the first downlink subframe may be: transmitting the pilot signal to the UE in all RBs or a part of RBs of the at least one other downlink subframe.

Specifically, the pilot signal is transmitted to the UE in all RBs of at least one OFDM symbol in the at least one other downlink subframe in addition to the first downlink subframe. Or, the pilot signal is transmitted to the UE in a part of RBs of at least one OFDM symbol in the at least one other downlink subframe in addition to the first downlink subframe.

For instance, the pilot signal is transmitted to the UE in all RBs of 1 or 4 OFDM symbols in the at least one other downlink subframe in addition to the first downlink subframe.

For example, the pilot signal is transmitted to the UE in a part of RBs of 1 or 4 OFDM symbols in the at least one other downlink subframe in addition to the first downlink subframe.

For example, the pilot signal is transmitted to the UE in all RBs of 1 OFDM symbol in the at least one other downlink subframe in addition to the first downlink subframe, and the pilot signal is transmitted to the UE in a part of RBs of other 3 OFDM symbols in the at least one other downlink subframe. Optionally, the number of the part of RBs is configurable. More preferably, the number of the part of RBs may be 25, 10 or 6, but is not limited thereto.

It should be noted that, in order to distinguish from the manner in the prior art in which a full band pilot signal is transmitted in each downlink subframe, when the pilot signal is transmitted in all RBs in the first downlink subframe and the other downlink subframes in addition to the first downlink subframe, according to this embodiment, the pilot signal may not be transmitted in at least one downlink subframe of the other downlink subframes in addition to the first downlink subframe.

Optionally, before transmitting the pilot signal to the UE on the part of RBs, the base station may transmit a first signaling to the UE, where the first signaling includes the number of the part of RBs. That is, the base station notifies the UE of the number of the part of RBs which are used through a signaling in advance.

It should be noted that, in the above implementation, pilot density that the base station transmits the pilot signal to the UE is not restricted, for example, the pilot density may be the same as the prior art, transmitting one pilot signal every 6 REs, and may also be different from the prior art.

It can be seen from the above, the method for transmitting the pilot signal provided by this embodiment allows to transmit a pilot signal in a downlink subframe in addition to a first downlink subframe, further meets application requirements for the pilot signal, and may transmit a full system bandwidth or non-system bandwidth pilot signal and, thus, has advantages of flexible implementations, a wide application scope, etc.

FIG. 2 is a flowchart of a method for transmitting a pilot signal according to another embodiment of the present invention. As shown in FIG. 2, the method of this embodiment includes:

Step 201, determining, according to a preset transmit period and a subframe offset number, a second downlink subframe for transmitting a pilot signal.

Step 202, transmitting the pilot signal to a UE in the second downlink subframe.

The second downlink subframe refers to a downlink subframe which needs to transmit the pilot signal.

In this embodiment, the transmit period and the subframe offset number are configurable. Specifically, a base station may configure the used transmit period and subframe offset number for the UE in advance.

In this embodiment, the base station determines the second downlink subframe for transmitting the pilot signal to the UE according to the preconfigured transmit period and subframe offset number, and then transmits the pilot signal to the UE in the second downlink subframe. Since the second downlink subframe for transmit the pilot signal to the UE by the base station is determined according to the transmit period, the pilot signals transmitted to the UE are periodical in time domain, compared to a scheme of the prior art in which the transmission is performed in each subframe, the number of times for transmitting the pilot signal is reduced, time domain resources occupied by the pilot signal are reduced, and overhead of transmitting the pilot signal is reduced.

It should be noted that, the manner of transmitting the pilot signal provided by the above embodiment particularly applies to a frequency division duplexing (Frequency Division Duplexing, FDD) mode, but is not limited thereto, for example, this manner may also applies to a TDD mode.

Optionally, in the TDD mode, the determined second downlink subframe includes a first downlink subframe after a transition from uplink-receiving to downlink-transmitting.

Optionally, an implementation of step 101 includes: the base station determines the second downlink subframe for transmitting the pilot signal according to the formula (1).

$$\text{Formula (1):} \quad 10 \times n_f + \lfloor n_s / 2 \rfloor - N_{OFFSET.RS}) \bmod N_{RS} = 0,$$

where, $n_f$ is the system frame number; $n_s$ is the time slot number within the subframe; $N_{OFFSET.RS}$ is the subframe offset number; $N_{RS}$ is the transmit period; mod is a modulo operation.

A manner of determining the second downlink subframe according to the formula (1) is: calculating a system frame number satisfying the formula (1), and determining a subframe corresponding to the calculated system frame number as the second downlink subframe. This manner can apply to both the FDD mode and the TDD mode simultaneously.

Another manner of determining the second downlink subframe according to the formula (1) is: calculating a system frame number satisfying the formula (1), and then judging whether a subframe corresponding to the calculated system frame number is a first downlink subframe after the transition from uplink-receiving to downlink-transmitting, if the judging result is yes, then determining the subframe corresponding to the calculated system frame number i as the second downlink subframe. This manner applies to the TDD mode.

Optionally, the above transmit period may be 5ms, but is not limited thereto. If the transmit period is 5ms, then the subframe offset number may be one of 0, 1, 2, 3, and 4. This condition applies to both the TDD mode and the FDD mode simultaneously.

Further, as for the TDD mode, the subframe offset number is associated with the uplink and downlink ratio. For instance, taking the transmit period being 5ms as an example, if the uplink and downlink ratio is 0, then the subframe offset number may be 0; if the uplink and downlink ratio is 1, then the subframe offset number may be 4; if the uplink and downlink ratio is 2, then the subframe offset number may be 3; if the uplink and downlink ratio is 3, then the subframe offset number may be 0; if the uplink and downlink ratio is 4, then the subframe offset number may be 4; if the uplink and downlink ratio is 5, then the subframe offset number may be 3; if the uplink and downlink ratio is 6, then the subframe offset number may be 0. In the TDD mode, the corresponding relationships between the uplink and downlink ratios and the value of the subframe offset numbers are shown as Table 1.

Table 1

| Uplink and Downlink Ratio | Subframe Offset Number |
|---|---|
| 0 | 0 |
| 1 | 4 |
| 2 | 3 |
| 3 | 0 |
| 4 | 4 |
| 5 | 3 |
| 6 | 0 |

Further, still taking the transmit period being 5ms as an example, if a downlink subframe corresponding to the system frame number calculated according to the formula (1) is determined as the second downlink subframe directly, when the uplink and downlink ratio is 0, the subframe offset number is 0, then the second downlink subframe determined according to the formula (1) is the downlink subframe of which the system frame number is 0 and 5 respectively, i.e., the $0^{th}$ subframe and the $5^{th}$ subframe. When the uplink and downlink ratio is 1, the subframe offset number is 4, then the second downlink subframe determined according to the formula (1) is the downlink subframe of which the system frame number is 4 and 9 respectively, i.e., the $4^{th}$ subframe and the $9^{th}$ subframe. When the uplink and downlink ratio is 2, the subframe offset number is 3, then the second downlink subframe determined according to the formula (1) is the downlink subframe of which the system frame number is 3 and 8 respectively, i.e., the $3^{th}$ subframe and the $8^{th}$ subframe. When the uplink and downlink ratio is 3, the subframe offset number is 0, then the second downlink subframe determined according to the formula (1) is the downlink subframe of which the system frame number is 0 and 5 respectively, i.e., the $0^{th}$ subframe and the $5^{th}$ subframe. When the uplink and downlink ratio is 4, the subframe offset number is 4, then the second downlink subframe determined according to the formula (1) is the downlink subframe of which the system frame number is 4 and 9 respectively, i.e., the $4^{th}$ subframe and the $9^{th}$ subframe. When the uplink and downlink ratio is 5, the subframe offset number is 3, then the second downlink subframe determined according to the formula (1) is the downlink subframe of which the system frame number is 3 and 8 respectively, i.e., the $3^{th}$ subframe and the $8^{th}$ subframe. When the uplink and downlink ratio is 6, the subframe offset number is 0, then the second downlink subframe determined according to the formula (1) is the downlink subframe of which the system frame number is 0 and 5 respectively, i.e., the $0^{th}$ subframe and the $5^{th}$ subframe. The corresponding relationships among the uplink and downlink ratios, the subframe offset numbers and the second downlink subframe numbers are shown as Table 2. The second downlink subframe numbers are shown as bold fonts in the table.

Table 2

| Uplink and Downlink Ratio | Uplink and Downlink Transition Period | Subframe Offset Number | Second Downlink Subframe Number | | | | | | | | | |
|---|---|---|---|---|---|---|---|---|---|---|---|---|
| | | | 0 | 1 | 2 | 3 | 4 | 5 | 6 | 7 | 8 | 9 |
| 0 | 5 ms | 0 | **D** | S | U | U | U | **D** | S | U | U | U |
| 1 | 5 ms | 4 | D | S | U | U | **D** | D | S | U | U | **D** |
| 2 | 5 ms | 3 | D | S | U | **D** | D | D | S | U | **D** | D |
| 3 | 10 ms | 0 | **D** | S | U | U | U | **D** | D | D | D | D |
| 4 | 10 ms | 4 | D | S | U | U | **D** | D | D | D | D | **D** |
| 5 | 10 ms | 3 | D | S | U | **D** | D | D | D | D | **D** | D |
| 6 | 5 ms | 0 | **D** | S | U | U | U | **D** | S | U | U | D |

Further, if, according to the second way, i.e., it needs to judge whether the downlink subframe corresponding to the system frame number calculated according to the formula (1) is a first downlink subframe after the transition from uplink-receiving to downlink-transmitting, then the result of determining the second downlink subframe is: when the uplink and downlink ratio is 0-5 respectively, the system frame number determined according to the formula (1) is the same as the results in the first manner respectively, i.e., when the uplink and downlink ratio is 0-5 respectively, the downlink subframes corresponding to the system frame numbers determined according to the formula (1) directly are first downlink subframes after the transition from uplink to downlink. When the uplink and downlink ratio is 6, the system frame numbers determined according to the formula (1) are 0 and 5, where, it is found by judgment that the downlink subframe of which the system frame number is 0 does not belong to a first downlink subframe after the transition from uplink to downlink, thus the downlink subframe of which the system frame number is 0 is not determined as the second downlink subframe in this implementation, and only the downlink subframe of which the system frame number is 5 can be determined as the second downlink subframe.

Further, in a case where the uplink and downlink ratio is 6, the first downlink subframes after the transition from uplink to downlink also include the downlink subframe of which the system frame number is 9, thus optionally, the base station, at the time of determining the downlink subframe of which the system frame number calculated according to the formula (1) is 5 as a second downlink subframe, also determines the downlink subframe of which the system frame number is 9 as a second downlink subframe. Thus, as for the case that the uplink and downlink ratio is 6, the second downlink subframes are the 5$^{th}$ downlink subframe and the 9$^{th}$ downlink subframe.

It should be noted that, as for a case where the uplink and downlink ratio is 6 in the TDD mode, in two situations where the system frame numbers are 0 and 5 as well as the system frame numbers are 5 and 9, the subframes of which the system frame number are 0 and 5 are used as the second downlink subframes preferably.

Optionally, an implementation of step 102 is: transmitting the pilot signal to the UE in a part of RBs in the second downlink subframe. For example, the pilot signal is transmitted to the UE in a part of RBs of each of the at least one OFDM symbol in the second downlink subframe. For instance, the pilot signal may be transmitted to the UE in a part of RBs of each OFDM symbol in 1 or 4 OFDM symbols in the second downlink subframe. This implementation means that the pilot signal transmitted to the UE in the second downlink subframe is non-full system bandwidth. The so-called full system bandwidth refers to all the RBs, correspondingly, the non-full system bandwidth refers to a part of RBs in all the RBs.

More preferably, an implementation of step 102 is: transmitting the pilot signal to the UE in all RBs in the second downlink subframe. This implementation means that the pilot signal transmitted to the UE in the second downlink subframe is full system bandwidth.

Specifically, a manner of transmitting the pilot signal to the UE in all the RBs in the second downlink subframe may be: transmitting the pilot signal to the UE in all RBs of at least one OFDM symbol in the second downlink subframe. In this implementation, as for each second downlink subframe, the pilot signal is transmitted to the UE in all RBs of at least one OFDM symbol in the second downlink subframe, while as for other OFDM symbols with a pilot signal transmission in the second downlink subframe, the pilot signal may be transmitted to the UE in all RBs or a part of RBs of the OFDM symbols.

For example, a preferred manner of transmitting the pilot signal to the UE in all the RBs of at least one OFDM symbol in the second downlink subframe is: transmitting the pilot signal to the UE in all RBs of 1 or 4 OFDM symbols in the second downlink subframe; i.e., transmitting the pilot signal to the UE on all RBs of each OFDM symbol in 1 or 4 OFDM symbols.

For example, another preferred manner is: transmitting the pilot signal to the UE in all RBs of 1 OFDM symbol in the second downlink subframe, and transmitting the pilot signal to the UE in a part of RBs of other 3 OFDM symbols in the second downlink subframe.

In addition, the OFDM symbol for transmitting the pilot signal in the second downlink subframe may be preset, and may also be configurable.

Based on a scheme of transmitting the pilot signal to the UE in all RBs of the OFDM symbol in the second downlink subframe, the above method may also include a step of transmitting the pilot signal to the UE in a part of RBs in other downlink subframes in addition to the second downlink subframe. That is to say, the base station besides transmits a full system bandwidth pilot signal to the UE in the determined second downlink subframe periodically, and may also transmit the pilot signal to the UE in a part of RBs in all other valid downlink subframes, i.e., the pilot signals transmitted to the UE in all other valid downlink subframes are non-full system bandwidth in frequency domain resources, and can be referred to as a narrowband pilot signal.

Based on the above, the manner of transmitting the pilot signal to the UE in the part of RBs of other downlink subframes in addition to the second downlink subframe may be: transmitting the pilot signal to the UE in at least one RE of a part of RBs of at least one OFDM symbol in each of the other downlink subframes in addition to the second downlink subframe. In this manner, the number of OFDM symbols for transmitting the pilot signal to the UE in each downlink subframe in the other downlink subframes may be one or more, for example, may be 4, 1, etc. In this manner, frequency domain granularity of the pilot signal transmitted on a part of RBs of each OFDM symbol is not restricted, i.e., the number of the part of RBs is not restricted, for example, may be 25, 10 or 6, etc, but is not limited thereto. Additionally, pilot density for transmitting the pilot signal on each RB may be the same as that of the prior art, i.e., transmitting one pilot signal every 6 REs, and may also be different from the prior art, which is not limited.

Optionally, the number of the part of RBs is configurable. More preferably, the number of the part of RBs may be 25, 10 or 6, but is not limited thereto.

When the uplink is switched to the downlink, great phase changes may occur in a radio frequency (RF), in this case, if indoor channel conditions are good, and can support a relatively high modulation mode, for example, a 256QAM modulation, then only the accurately frequency tracking of the subframe, at which the phase jump occurs, needs to be performed by a full system bandwidth pilot signal, and the accurately frequency tracking of other subframes with relatively small phase changes may be performed by using a non-full system bandwidth pilot signal, in this way, a high order modulation can be satisfied, for example, requirements of 256QAAM for frequency timing. The manner, in which a full system bandwidth pilot signal is transmitted at a second downlink subframe and a non-full system bandwidth pilot signal is transmitted in other downlink subframes, provided by embodiments of the present invention can satisfy the requirements above.

Optionally, before transmitting the pilot signal to the UE in the part of RBs of other downlink subframes in addition to the second downlink subframe, the base station may transmit a first signaling to the UE, where the first signaling includes the number of the part of RBs. That is, the base station may notify the UE of the number of the part of RBs through a signaling in advance.

Optionally, before transmitting the pilot signal to the UE in the second downlink subframe, the base station may transmit the second signaling to the UE, where the second signaling includes the transmitting period and the subframe offset number. That is, the base station notifies the UE of the transmitting period and the subframe offset number in advance through a signaling such as a radio resource control protocol (Radio Resource Control, RRC) signaling or other high layer signalings.

Optionally, before determining the second downlink subframe for transmitting the pilot signal according to the preset transmit period and the subframe offset number, the base station may receive a feature group indicator (Feature Group Indicator, FGI) bit or a third signaling transmitted by the UE, where the FGI bit or the third signaling includes a capability identifier indicating that the UE supports to transmit pilot signals periodically. That is, the UE notifies the base station through a signaling in advance that the UE allows the base station to transmit the pilot signal in a manner of transmitting pilot signals periodically, i.e. receiving the pilot signal in a periodical manner is supported.

It can be seen from the above that, in the method for transmitting the pilot signal provided by embodiments of the present invention, the pilot signals are transmitted periodically, thus the overhead of the pilot signals are reduced; besides, transmitting a non-full system bandwidth pilot signal in other valid downlink subframes is allowed, and performing a flexible configuration and notice for the number of the part of RBs which are used, the transmit period, and the subframe offset number, therefore, this method having an advantage of flexible implementations.

The method for transmitting the pilot signal provided by embodiments as shown in FIG. 2 also applies to the FDD mode and the TDD mode, but differs in some technical implementations. In order to be clearer about which of the above schemes applies to the FDD and which applies to the TDD, the schemes above will be concluded and described hereafter from perspectives of the TDD mode and the FDD mode respectively.

Schemes which apply to the TDD mode include the following:

(1): Schemes of periodically transmitting a pilot signal to the UE in all RBs or a part of RBs in the second downlink subframe, it is required in this scheme that the second downlink subframe includes a first downlink subframe after the transition from uplink-receiving to downlink-transmitting.

It should be noted that, transmitting the pilot signal in all the RBs of the second downlink subframe is a preferred implementation.

In scheme (1), the base station may determine the second downlink subframe according to the formula (1).

More preferably, the transmit period may be 5ms, but is not limited thereto. The subframe offset number is associated with the uplink and downlink ratio. When the transmitting period is 5ms, the relationship between them is shown as Table 1.

Based on the above, a manner of determining the second downlink subframe by the base station according to the formula (1) may be: determining a downlink subframe corresponding to the system frame number calculated according to the formula (1) as the second downlink subframe directly, the obtained results are shown as Table 2. Another manner of determining the second downlink subframe by the base station according to the formula (1) may be: as for a case where the uplink and downlink ratio is 0-5, determining a downlink subframe corresponding to the system subframe number calculated according to the formula (1) as the second downlink subframe directly; as for a case where the uplink and downlink ratio is 6, at the time of determining the downlink subframe of which the system frame number calculated according to the formula (1) is 5 as a second downlink subframe, determining the downlink subframe of which the system frame number is 9 is determined as a second downlink subframe.

It should be noted that, as for a case where the uplink and downlink ratio is 6, sub frames of which the system frame number is 0 and 5 are used as the second downlink subframes preferably.

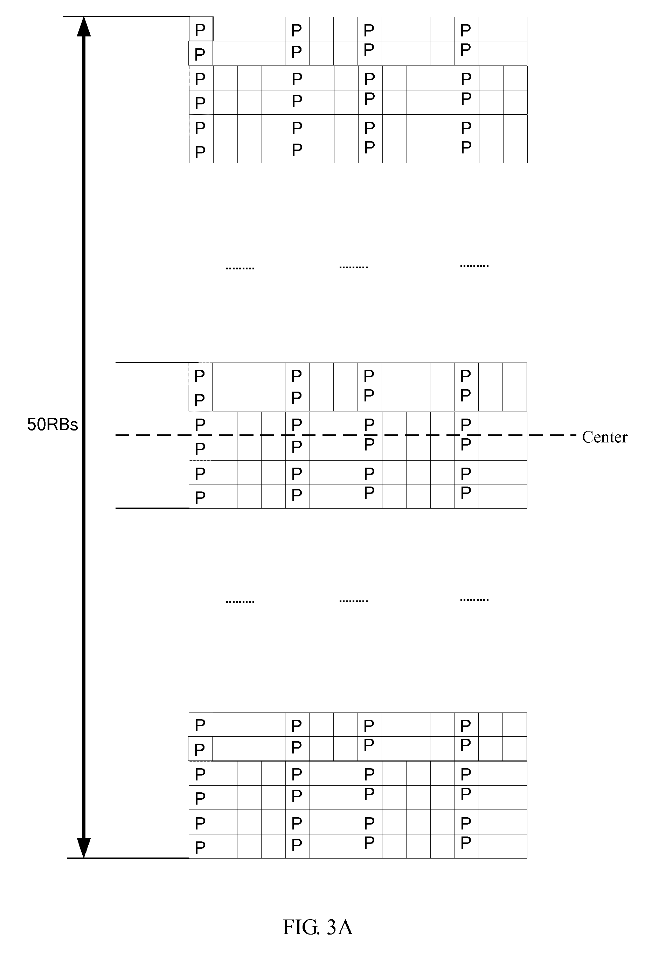

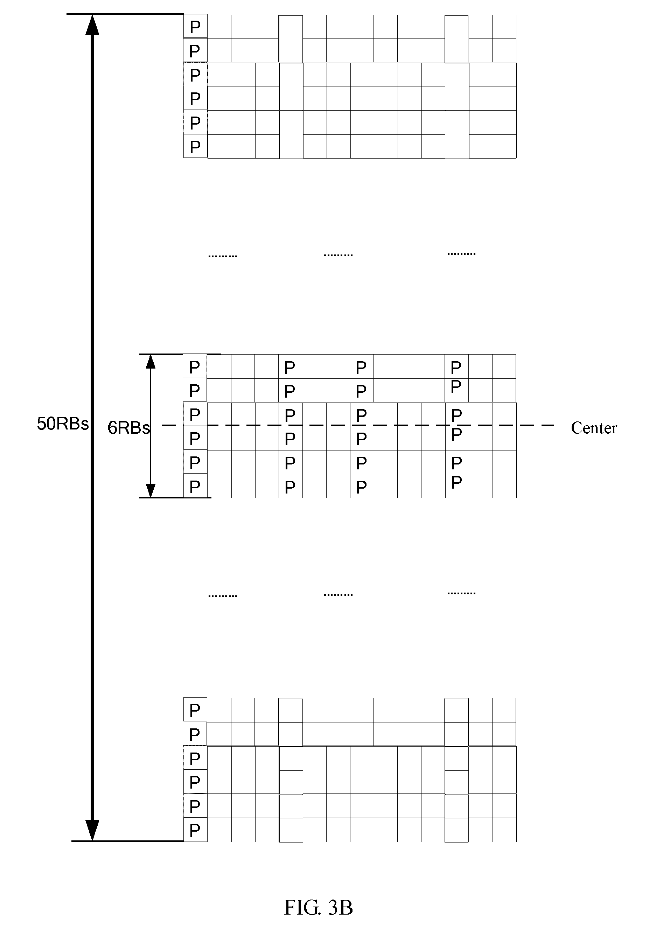

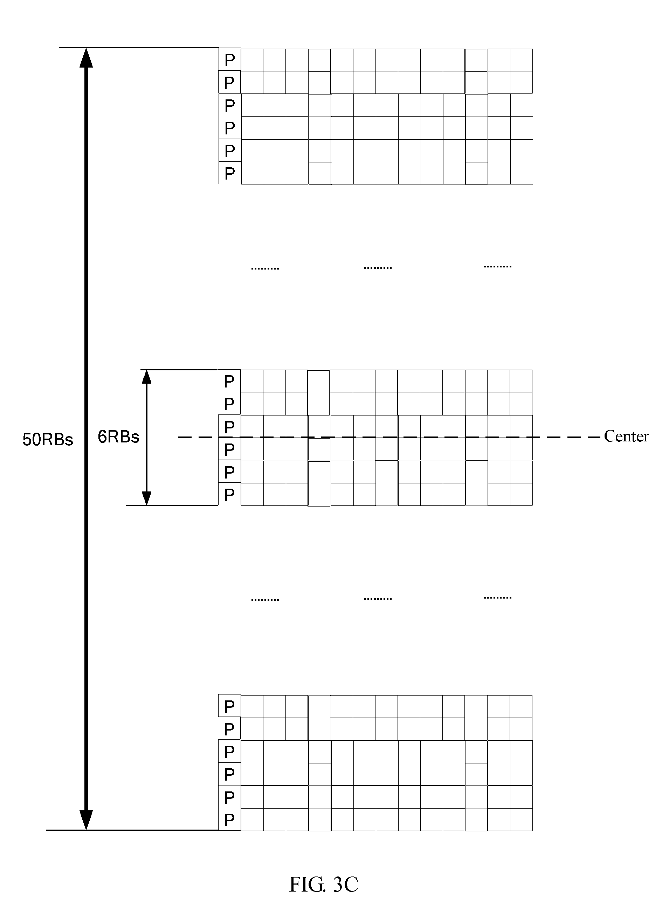

In scheme (1), the base station may transmit the pilot signal to the UE in all RBs of at least one OFDM symbol in the second downlink subframe. For instance, the base station may transmit the pilot signal to the UE in all RBs of 4 OFDM symbols in the second downlink subframe, i.e., transmitting the pilot signal to the UE in all RBs of each OFDM symbol in 4 OFDM symbols. FIG. 3A provides a pilot pattern corresponding to a pilot signal which is transmitted to the UE in all RBs of 4 OFDM symbols in one second downlink subframe. In FIG. 3A, the full system bandwidth includes 50 RBs, one second downlink subframe includes 14 OFDM symbols. For another instance, the base station may transmit the pilot signal to the UE in all RBs of 1 OFDM symbol in the second downlink subframe, and transmit the pilot signal to the UE in a part of RBs of other 3 OFDM symbols in the second downlink subframe, the pilot pattern corresponding to this manner is shown as FIG. 3B. In FIG. 3B, the part of RBs are 6 RBs in the middle, but the number and the position of the part of RBs are not limited thereto. For another instance, the base station may transmit the pilot signal to the UE in all RBs of 1 OFDM symbol in the second downlink subframe, and the pilot pattern corresponding to this manner is shown as FIG. 3C. In FIG. 3A-FIG. 3C, an RB marked with "P" is an OFDM symbol for transmitting the pilot signal (each column is an OFDM symbol).

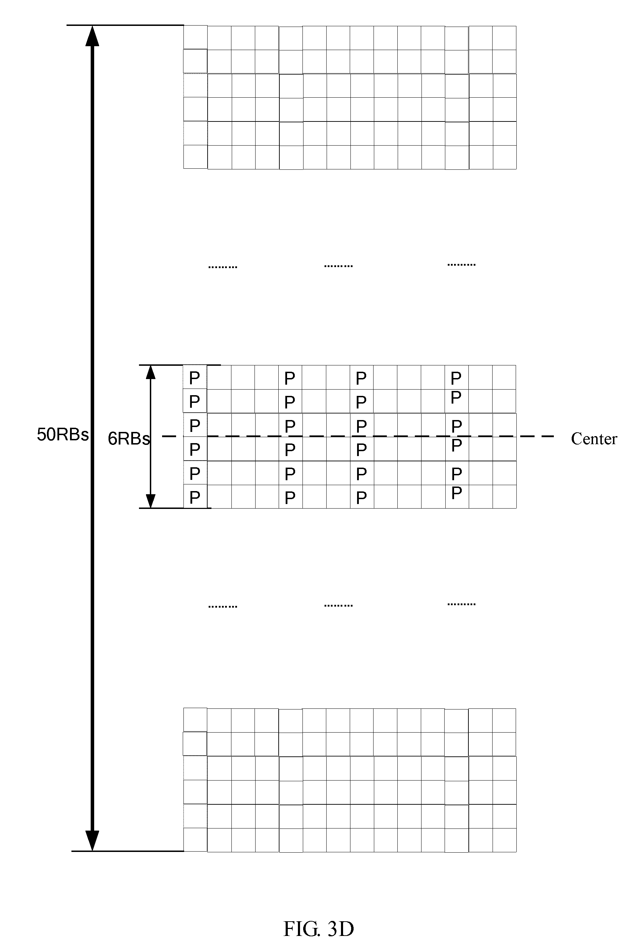

In scheme (1), the base station may transmit the pilot signal to the UE in a part of RBs of at least one OFDM symbol in the second downlink subframe. For instance, the base station may transmit the pilot signal to the UE in a part of RBs of 1 or 4 OFDM symbols in the second downlink subframe, i.e., transmitting the pilot signal to the UE in a part of RBs of each OFDM symbol in 1 or 4 OFDM symbols. FIG. 3D provides a pilot pattern corresponding to a pilot signal which is transmitted to the UE in a part of RBs of 4 OFDM symbols in one second downlink subframe. In FIG. 3D, the part of RBs are 6 RBs in the middle, and the number and the position of the part of RBs are not limited thereto, an RB marked with "P" is an OFDM symbol for transmitting the pilot signal.

Optionally, the base station may notify the UE of information about the number and position of the part of RBs which are used through a first signaling in advance.

Optionally, the base station may notify the UE of the transmit period and the subframe offset number through a second signaling in advance.

Optionally, the UE may notify, through an FGI bit or a third signaling in advance, the base station of whether the UE supports to transmit a pilot signal periodically, and the base station may know whether the UE supports the base station to transmit the pilot signal in a periodic manner through the FGI bit or the third signaling.

(2): Schemes of periodically transmitting a pilot signal to the UE in all RBs of the second downlink subframe, and transmitting the pilot signal to the UE in a part of RBs of other downlink subframes in addition to the second downlink subframe.

In scheme (2), reference may be made to descriptions in scheme (1) for related information about periodically transmtting the pilot signal to the UE in all RBs of the second downlink subframe.

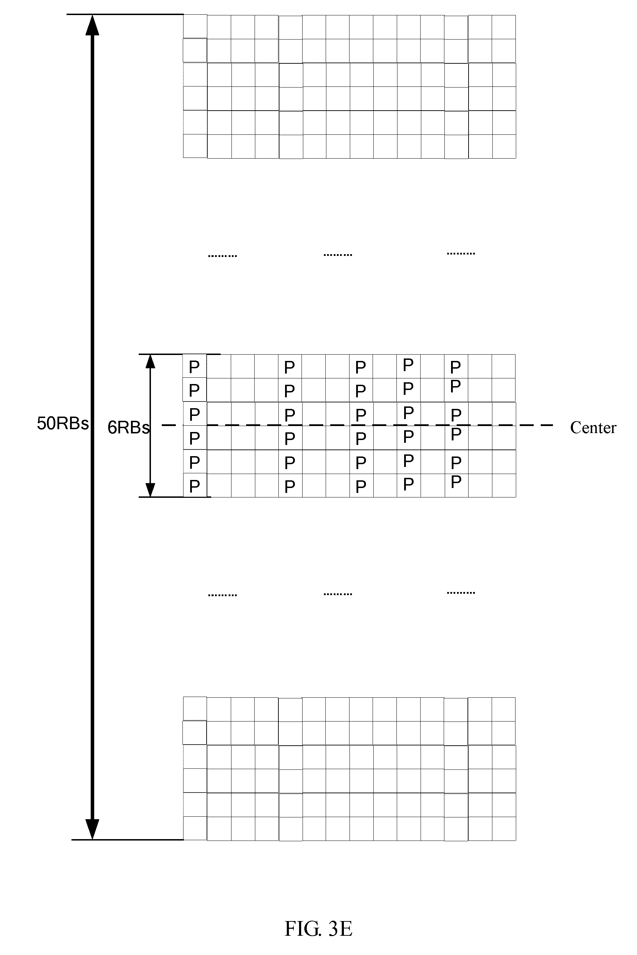

In scheme (2), the base station may transmit the pilot signal to the UE in at least one RE of a part of RBs in at least one OFDM symbol in each of the other downlink subframes in addition to the second downlink subframe. For instance, the base station may transmit the pilot signal to the UE in a part of RBs of 5 OFDM symbols in the other downlink subframes in addition to the second downlink subframe, the pilot pattern corresponding to this manner is shown as FIG. 3E. In FIG. 3E, the full system bandwidth is 50 RBs, and the part of RBs are 6 RBs in the middle, but the number and the position of the part of RBs are not limited thereto. In FIG. 3E, an RB marked with "P" is an OFDM symbol for transmitting the pilot signal.

Optionally, the number of the part of RBs is configurable. More preferably, the number of the part of RBs may be 25, 10 or 6, but is not limited thereto.

Optionally, the base station may notify the UE of information such as the number and the position of the part of RBs through a first signaling in advance.

(3): Schemes of determining a first downlink subframe after the transition from uplink-receiving to downlink-transmitting according to an uplink and downlink ratio relationship, i.e., the first downlink subframe, and transmitting a pilot signal to a UE in the first downlink subframe.

In scheme (3), besides transmitting the pilot signal in the first downlink subframe after the transition from uplink-receiving to downlink-transmitting, the base station may also transmit the pilot signal in other downlink subframes.

Optionally, the base station may transmit the pilot signal to the UE in all RBs or a part of RBs of at least one OFDM symbol in the first downlink subframe.

Optionally, the base station may transmit the pilot signal to the UE in all RBs or a part of RBs of at least one OFDM symbol in other downlink subframes in addition to the first downlink subframe.

In this implementation, pilot density that the base station transmits the pilot signal to the UE is not restricted, for example, the pilot density may be the same as the prior art, transmitting one pilot signal every 6 REs, and may also be different from the prior art. For instance, the base station may transmit the pilot signal to the UE in each first downlink subframe or at a part of RBs of 4 OFDM symbols of other downlink subframes in addition to the first downlink subframe, the pilot pattern corresponding to this manner is shown as FIG. 3D.

Schemes which apply to the FDD mode include the following:

(a): Schemes of periodically transmitting a pilot signal to the UE in all RBs or a part of RBs of the second downlink subframe. It does not need to define in this scheme that the second downlink subframe includes a first downlink subframe after the transition from uplink-receiving to downlink-transmitting.

It should be noted that, transmitting the pilot signal in all the RBs of the second downlink subframe is a preferred implementation. In scheme (a), the base station may determine the second downlink subframe according to the formula (1).

More preferably, the transmit period may be 5ms, but is not limited thereto. When the transmit period is 5ms, a value of the subframe offset number may be one of 0, 1, 2, 3, and 4.

In scheme (a), the base station may transmit a pilot signal to the UE in all RBs of at least one OFDM symbol in the second downlink subframe. Illustrations may be as shown in FIG. 3A-FIG. 3C.

Optionally, the base station may notify the UE of information about the number and the position of the part of RBs which are used through a first signaling in advance.

Optionally, the base station may notify the UE of the transmit period and the subframe offset number through a second signaling in advance.

Optionally, the UE may notify, through an FGI bit or a third signaling in advance, the base station of whether the UE supports to transmit a pilot signal periodically, and the base station may know whether the UE supports the base station to transmit the pilot signal in a periodic manner through the FGI bit or the third signaling.

(b): Schemes of periodically transmitting a pilot signal to the UE in all RBs of the second downlink subframe, and transmitting the pilot signal to the UE in a part of RBs in other downlink subframes in addition to the second downlink subframe.

In scheme (b), reference may be made to descriptions in scheme (a) for related information about periodically transmtting the pilot signal to the UE in all RBs of the second downlink subframe.

In scheme (b), the base station may transmit the pilot signal to the UE in at least one RE of a part of RBs of at least one OFDM symbol in each of the other downlink subframes in addition to the second downlink subframe. Illustrations may be as shown in FIG. 3D.

Optionally, the number of the part of RBs is configurable. More preferably, the number of the part of RBs may be 25, 10 or 6, but is not limited thereto.

Optionally, the base station may notify the UE of information about the number and the position of the part of RBs through a first signaling in advance.

In summary, embodiments of the present invention reduce the overhead of transmitting pilot signals by reducing time domain resources and/time domain resources occupied by a pilot signal, and particularly apply to various scenarios in which the pilot signal does not needs to be transmitted in a high density, for example, an indoor scenario with slow channel state changes.

In addition, as for a carrier aggregation scenario, a DMRS and a CRS are transmitted over a main carrier, where the DMRS is used for data demodulation, and the CRS is used for demodulation of a common channel and a PDCCH, and a TRS is transmitted over an auxiliary carrier, where the TRS is dedicated for frequency tracking and timing synchronization. In this environment, considering that the density required by the TRS is not large, thus the manners according to the above embodiments of the present invention may also be used for transmitting, which facilitates overhead reduction of transmitting a pilot signal.

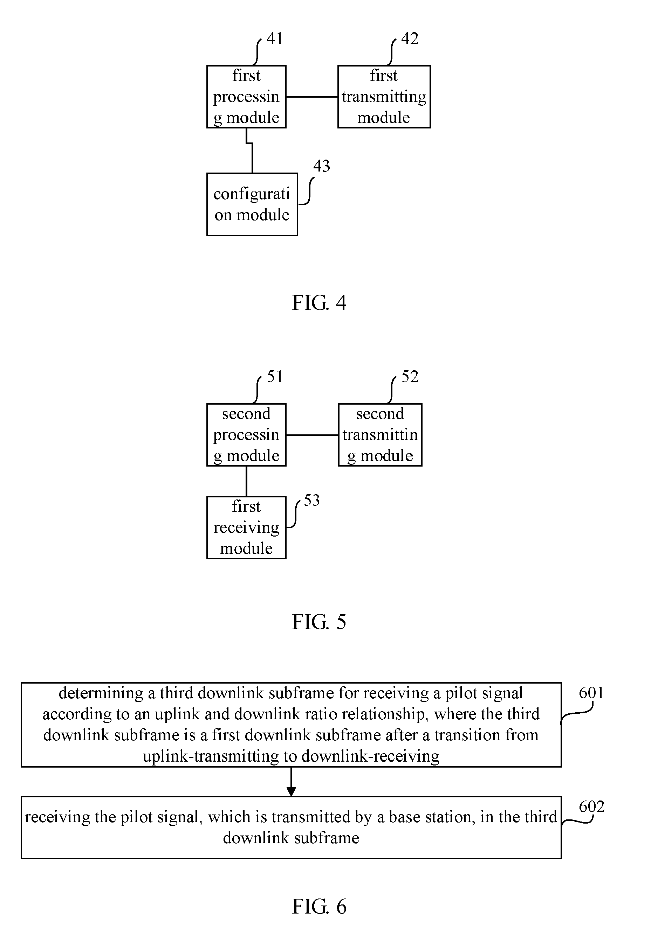

FIG. 4 is a schematic structural diagram of a base station according to an embodiment of the present invention. As shown in FIG. 4, the base station according to this embodiment includes: a first processing module 41 and a first transmitting module 42.

The first processing module 41 is configured to determine a first downlink subframe for transmitting a pilot signal according to an uplink and downlink ratio relationship, where the first downlink subframe is a first downlink subframe after a transition from uplink-receiving to downlink-transmitting. The first transmitting module 42 is connected to the first processing module 41, and is configured to transmit the pilot signal to a UE in the first downlink subframe determined by the first processing module 41.

Functional modules of the base station according to this embodiment may be used to perform procedures of the method for transmitting the pilot signal as shown in FIG. 1, specific operational principles thereof will not go into a detailed description, reference may be made to descriptions in method embodiments for details.

The base station according to this embodiment determines a first downlink subframe after a transition from uplink-receiving to downlink-transmitting according to an uplink and downlink ratio relationship, and transmits a pilot signal to a UE in the determined first downlink subframe, instead of transmitting a pilot signal to the UE in each downlink subframe. Thus, time domain resources occupied by the pilot signal are reduced, and overhead of transmitting the pilot signal is reduced.

Optionally, the first transmitting module 42 is further configured to transmit the pilot signal to the UE in at least one other downlink subframe in addition to the first downlink subframe. A further compensation may be made to application requirements of a pilot signal via pilot signals in other downlink subframes, for example, using the pilot signal in the first downlink subframe to perform accurate frequency tracking, data demodulation, channel demodulation, etc., and using the pilot signals in other subframes to perform frequency tracking and timing synchronization of ordinary accuracy.

Optionally, the first transmitting module 42 may be specifically configured to transmit the pilot signal to the UE in all RBs or a part of RBs of the first downlink subframe.

Further, the first transmitting module 42 may be more specifically configured to transmit the pilot signal to the UE in all RBs or a part of RBs of at least one OFDM symbol in the first downlink subframe.

For example, the first transmitting module 42 may be more specifically configured to transmit the pilot signal to the UE in all RBs of 1 or 4 OFDM symbols in the first downlink subframe.

For example, the first transmitting module 42 may be more specifically configured to transmit the pilot signal to the UE in a part of RBs of 1 or 4 OFDM symbols in the first downlink subframe.

For another example, the first transmitting module 42 may be more specifically configured to transmit the pilot signal to the UE in all RBs of 1 OFDM symbol in the first downlink subframe, and transmit the pilot signal to the UE in a part of RBs of other 3 OFDM symbols in the first downlink subframe.

Optionally, the number of the part of RBs is configurable. More preferably, the number of the part of RBs is 25, 10 or 6, but is not limited thereto.

Further, the first transmitting module 42 according to this embodiment may be specifically configured to transmit the pilot signal to the UE in all RBs or a part of RBs of the at least one other downlink subframe in addition to the first downlink subframe.

The first transmitting module 42 may be more specifically configured to transmit the pilot signal to the UE in all RBs or a part of RBs of at least one OFDM symbol in the at least one other downlink subframe.

For example, the first transmitting module 42 may be more specifically configured to transmit the pilot signal to the UE in all RBs of 1 or 4 OFDM symbols in the at least one other downlink subframe.

For another exampple, the first transmitting module 42 may be more specifically configured to transmit the pilot signal to the UE in a part of RBs of 1 or 4 OFDM symbols in the at least one other downlink subframe.

For another example, the first transmitting module 42 may be more specifically configured to transmit the pilot signal to the UE in all RBs of 1 OFDM symbol in the at least one other downlink subframe, and transmit the pilot signal to the UE in a part of RBs of other 3 OFDM symbols in the at least one other downlink subframe.

Furthermore, as shown in FIG. 4, the base station according to this embodiment also includes: a configuration module 43. The configuration module 43 is connected to the first processing module 41, and is used for configuring the uplink and downlink ratio relationship before the first processing module 41 determines the first downlink subframe according to the configuration relationship. The base station according to this embodiment can perform a dynamic configuration to the uplink and downlink ratio relationship through the configuration module 43, such that the uplink and downlink ratio relationship is more flexible.

The base station according to this embodiment determines a first downlink subframe after a transition from the uplink-receiving to the downlink-transmitting according to an uplink and downlink ratio relationship, and transmits a pilot signal to a UE in the determined first downlink subframe, instead of transmitting a pilot signal to the UE in each downlink subframe. Thus, time domain resources occupied by the pilot signal are reduced, and overhead of transmitting the pilot signal is reduced.

FIG. 5 is a schematic structural diagram of a base station according to another embodiment of the present invention. As shown in FIG. 5, the base station according to this embodiment includes: a second processing module 51 and a second transmitting module 52.

The second processing module 51 is configured to determine, according to a preset transmit period and a subframe offset number, a second downlink subframe for transmitting a pilot signal. The second transmitting module 52 is connected to the second processing module 51, and is configured to transmit the pilot signal to a UE in the second downlink subframe determined by the second processing module 51.

Functional modules of the base station according to this embodiment may be used to perform procedures of the method for transmitting the pilot signal as shown in FIG. 2, specific operational principles thereof will not go into a detailed description, reference may be made to descriptions in method embodiments for details.

The base station according to this embodiment determines a downlink subframe for transmitting a pilot signal through a preset transmit period and a subframe offset number, and then transmits the pilot signal to a UE in the determined downlink subframe, therefore, transmitting a pilot signal to the UE periodically is implemented, instead of transmitting a pilot signal to the UE in each subframe. Thus, time domain resources occupied by the pilot signal are reduced, and overhead of transmitting the pilot signal is reduced.

Optionally, in the TDD mode, the second downlink subframe determined by the second processing module 51 includes a first downlink subframe after a transition from uplink-receiving to downlink-transmitting.

Optionally, the second processing module 51 may determine the second downlink subframe according to the formula (1). Reference may be made to method embodiments for descriptions about the formula (1) and related parameters therein, and will not be repeated herein.

Optionally, the transmit period and the subframe offset number are configurable.

Optionally, in the FDD mode, the transmit period may be 5ms, but is not limited thereto. When the transmit period is 5ms, the subframe offset number may be one of 0, 1, 2, 3, and 4.

Optionally, in the TDD mode, the transmit period may be 5ms, but is not limited thereto. When the transmit period is 5ms, the subframe offset number may be one of 0, 1, 2, 3, and 4, and the subframe offset number is associated with the uplink and downlink ratio. Specifically, if the uplink and downlink ratio is 0, the subframe offset number is 0; if the uplink and downlink ratio is 1, the subframe offset number is 4; if the uplink and downlink ratio is 2, the subframe offset number is 3; if the uplink and downlink ratio is 3, the subframe offset number is 0; if the uplink and downlink ratio is 4, the subframe offset number is 4; if the uplink and downlink ratio is 5, the subframe offset number is 3; if the uplink and downlink ratio is 6, the subframe offset number is 0.

Based on the above, the second processing module 51 may be more specifically configured to, when the uplink and downlink ratio is 6, according to the formula (1), obtain a downlink subframe of which the system frame number is 0 and 5 by calculation, determine the downlink subframe of which the system frame number is 5 as a second downlink subframe, meanwhile determine a downlink subframe of which the system frame number is 9 as a second downlink subframe.

It should be noted that, as for a case where the uplink and downlink ratio is 6, a downlink subframe of which the system frame number is 0 and 5 is used as the second downlink subframe preferably.

The second transmitting module 52 may be specifically configured to transmit the pilot signal to the UE in all RBs or a part of RBs of the second downlink subframe.

The second transmitting module 52 is further configured to transmit the pilot signal to the UE in a part of RBs of further downlink subframes in addition to the second downlink subframe.

Furthermore, the second transmitting module 52 may be specifically configured to transmit the pilot signal to the UE in at least one RE of a part of RBs of at least one OFDM symbol in each of the other downlink subframes in addition to the second downlink subframe.

Optionally, the number of the part of RBs is configurable. More preferably, the number of the part of RBs can be 25 or 10 or 6, but is not limited thereto.

Optionally, the second transmitting module 52 may be further configured to, before transmitting the pilot signal to the UE in the part of RBs of other downlink subframes in addition to the second downlink subframe, transmit a first signaling to the UE, where the first signaling includes the number of the part of RBs.

Optionally, the second transmitting module 52 may be more specifically configured to transmit the pilot signal to the UE in all RBs or a part of RBs of at least one OFDM symbol in the second downlink subframe.

For example, the second transmitting module 52 may be more specifically configured to transmit the pilot signal to the UE in all RBs of 1 or 4 OFDM symbols in the second downlink subframe.

For example, the second transmitting module 52 may be more specifically configured to transmit the pilot signal to the UE in a part of RBs of 1 or 4 OFDM symbols in the second downlink subframe.

For another example, the second transmitting module 52 may be more specifically configured to transmit the pilot signal to the UE in all RBs of 1 OFDM symbol in the second downlink subframe, and transmit the pilot signal to the UE in a part of RBs of other 3 OFDM symbols in the second downlink subframe.

Optionally, the second transmitting module 52 may be further configured to, before transmitting the pilot signal to the UE in the second downlink subframe, transmit a second signaling to the UE, where the second signaling includes the transmit period and the subframe offset number.

Furthermore, as shown in FIG. 5, the base station according to this embodiment may further include: a first receiving module 53.

The first receiving module 53 is connected to the second processing module 51, and is configured to receive an FGI bit or a third signaling transmitted by the UE before the second processing module 51 determines the second downlink subframe for transmitting the pilot signal according to the preset transmitting period and the subframe offset number, where the FGI bit or the third signaling includes a capability identifier indicating that the UE supports to transmit a pilot signal periodically.

The base station according to this embodiment determines a downlink subframe for transmitting a pilot signal through a preset transmit period and subframe offset number, and then transmits the pilot signal to a UE in the determined downlink subframe, therefore, transmitting a pilot signal to the UE periodically is implemented, instead of transmitting a pilot signal to the UE in each subframe. Thus, time domain resources occupied by the pilot signal are reduced, and overhead of transmitting the pilot signal is reduced.

In the following method for receiving the pilot signal according to embodiments of the present invention, the executive entity is a UE.

FIG. 6 is a flowchart of a method for receiving a pilot signal according to an embodiment of the present invention. As shown in FIG. 6, the method according to this embodiment include:

Step 601: determining a third downlink subframe for receiving a pilot signal according to an uplink and downlink ratio relationship, where the third downlink subframe is a first downlink subframe after a transition from uplink-transmitting to downlink-receiving.

Step 602, receiving the pilot signal, which is transmitted by a base station, in the third downlink subframe.

The method for receiving the pilot signal according to this embodiment applies to the TDD mode.

The method according to this embodiment is adaptable to the method for transmitting the pilot signal as shown in FIG. 1, and is used for receiving the pilot signal transmitted by the base station. The third downlink subframe according to this embodiment and the first downlink subframe determined by the base station are downlink subframes having a same system frame number.

In this embodiment, a UE cooperates with a base station, and determines a first downlink subframe after the transition from the uplink to the downlink according to the uplink and downlink ratio relationship, the base station transmits a pilot signal to the UE in the determined first downlink subframe, instead of transmitting a pilot signal to the UE in each downlink subframe, and the UE receives the pilot signal, which is transmitted by the base station, in the determined downlink subframe, thus time domain resources occupied by a pilot signal are reduced, and overhead of transmitting the pilot signal is reduced.

Optionally, the above method for receiving may also include: receiving the pilot signal, which is transmitted by the base station, in at least one other downlink subframe in addition to the third downlink subframe.

Optionally, a specific implementation of step 602 may be: receiving the pilot signal, which is transmitted by the base station, in all resource blocks (RB) or a part of RBs in the third downlink subframe.

Furthermore, the receiving the pilot signal, which is transmitted by the base station, in all the resource blocks (RB) or the part of RBs in the third downlink subframe is specifically: receiving the pilot signal, which is transmitted by the base station, in all RBs or a part of RBs of at least one orthogonal frequency division multiplexing (OFDM) symbol in the third downlink subframe.

For example, the pilot signal transmitted by the base station may be received in all RBs of 1 or 4 OFDM symbols in the third downlink subframe.

For example, the pilot signal transmitted by the base station may be received in a part of RBs of 1 or 4 OFDM symbols in the third downlink subframe.

For example, the pilot signal transmitted by the base station may be received in all RBs of 1 OFDM symbol in the third downlink subframe, and the pilot signal transmitted by the base station may be received in a part of RBs of other 3 OFDM symbols in the third downlink subframe.

A way for receiving the pilot signal, which is transmitted by the base station, in the at least one other downlink subframe in addition to the third downlink subframe may be: receiving the pilot signal, which is transmitted by the base station, in all RBs or a part of RBs of the at least one other downlink subframes.

Furthermore, the receiving the pilot signal, which is transmitted by the base station, in all the RBs or the part of RBs in the at least one other downlink subframe may be specifically: receiving the pilot signal transmitted by the base station in all RBs or a part of RBs of at least one OFDM symbol in the at least one other downlink subframe.

For example, the pilot signal transmitted by the base station may be received in all RBs of 1 or 4 OFDM symbols in the at least one other downlink subframe.

For example, the pilot signal transmitted by the base station may be received in a part of RBs of 1 or 4 OFDM symbols in the at least one other downlink subframe.

For example, the pilot signal transmitted by the base station may be received in all RBs of 1 OFDM symbol in the at least one other downlink subframes, and the pilot signal transmitted by the base station may be received in a part of RBs of other 3 OFDM symbols in the at least one other downlink subframe.

Furthermore, in the receiving method above, before the determining the third downlink subframe for receiving the pilot signal according to the uplink and downlink ratio relationship, the uplink and downlink ratio relationship transmitted by the base station may also be received.

It should be noted that, steps in the method for receiving the pilot signal according to this embodiment can be adaptable to the method for transmitting the pilot signal by the base station, and will not be repeated herein.

To sum up, in this embodiment, the UE determines a first downlink subframe after a transition from the uplink to the downlink according to the uplink and downlink ratio relationship by cooperating with the base station, the base station transmits a pilot signal to the UE in the determined first downlink subframe, instead of transmitting a pilot signal to the UE in each downlink subframe, and the UE receives the pilot signal transmitted by the base station in the determined downlink subframe, thus time domain resources occupied by a pilot signal are reduced, and overhead of transmitting the pilot signal is reduced.

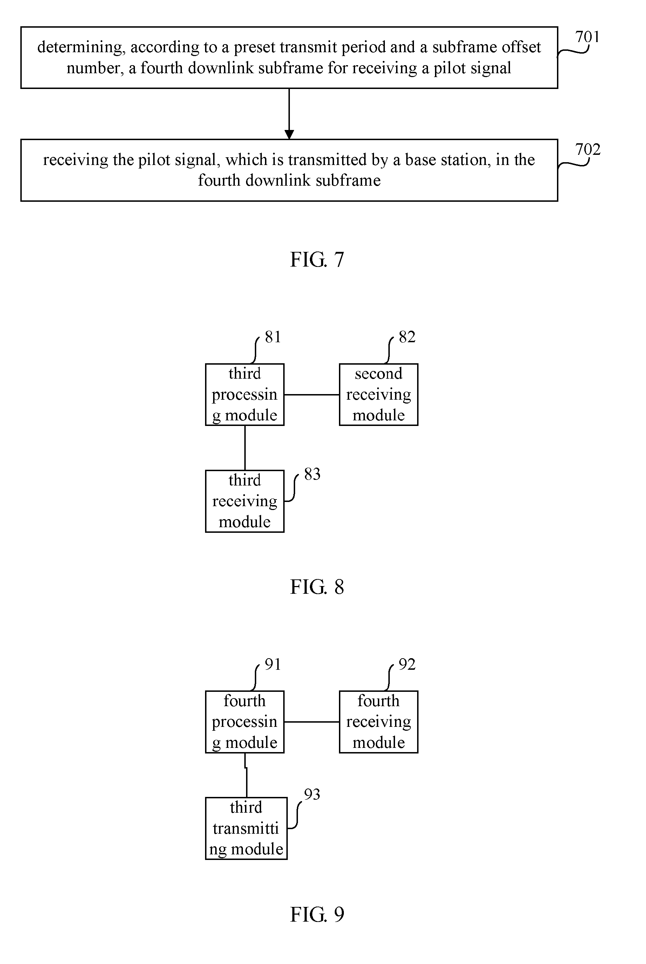

FIG. 7 is a flowchart of a method for receiving a pilot signal according to another embodiment of the present invention. As shown in FIG. 7, the method according to this embodiment includes:

Step 701, determining, according to a preset transmit period and a subframe offset number, a fourth downlink subframe for receiving a pilot signal.

Step 702, receiving the pilot signal, which is transmitted by a base station, in the fourth downlink subframe.

The transmit period and the subframe offset number according to this embodiment are configurable. The fourth downlink subframe is a downlink subframe for receiving a pilot signal by the UE.

The method for receiving the pilot signal by the UE according to this embodiment is adaptable to the method for transmitting the pilot signal by the base station as shown in FIG. 2, and is used for receiving the pilot signal transmitted by the base station. The fourth downlink subframe according to this embodiment and the second downlink subframe according to the embodiment as shown in FIG. 2 are downlink subframes having a same system frame number.

In this embodiment, a UE cooperates with a base station, the UE and the base station determine a downlink subframe for transmitting a pilot signal via a preset transmitg period and a subframe offset number respectively, the base station transmits a pilot signal to the UE in the determined downlink subframe, thereby transmitting a pilot signal to the UE periodically, instead of transmitting a pilot signal to the UE in each subframe, and the UE receives the pilot signal in the determined downlink subframe, thus time domain resources occupied by a pilot signal are reduced, and overhead of transmitting the pilot signal is reduced.

Optionally, in the above method for receiving, an optional implementation of step 101 includes: determining the fourth downlink subframe according to the formula (1). Reference may be made to method embodiments for descriptions about the formula (1) and related parameters therein, and will not be repeated herein.

Alternatively, the transmit period and the subframe offset number are configurable. Preferably, the transmit period is 5ms; the subframe offset number is one of 0, 1, 2, 3, and 4.

Alternatively, before receiving the pilot signal, which is transmitted by the base station, in the part of RBs of other downlink subframes in addition to the fourth downlink subframe, the following may be included: a step of receiving a first signaling transmitted by the base station, where the first signaling includes the number of the part of RBs.

An implementation of receiving the pilot signal, which is transmitted by the base station, in the fourth downlink subframe may be: receiving the pilot signal, which is transmitted by the base station, in all RBs or a part of RBs of the fourth downlink subframe.

Furthermore, an implementation of receiving the pilot signal, which is transmitted by the base station, in all RBs or a part of RBs of the fourth downlink subframe may be:

receiving the pilot signal, which is transmitted by the base station, in all RBs or a part of RBs of at least one OFDM symbol in the fourth downlink subframe.

For example, the pilot signal transmitted by the base station may be received in all RBs of 1 or 4 OFDM symbols in the fourth downlink subframe.

For example, the pilot signal transmitted by the base station may be received in a part of RBs of 1 or 4 OFDM symbols in the fourth downlink subframe.

For example, the pilot signal transmitted by the base station may be received in all RBs of 1 OFDM symbol in the fourth downlink subframe, and the pilot signal transmitted by the base station may be received in a part of RBs of other 3 OFDM symbols in the fourth downlink subframe.

Optionally, in the above method for receiving, a step of receiving the pilot signal, which is transmitted by the base station, in a part of RBs of other downlink subframes in addition to the fourth downlink subframe may also be included.

An implementation of receiving the pilot signal, which is transmitted by the base station, in the part of RBs of other downlink subframes in addition to the fourth downlink subframe may be: receiving the pilot signal, which is transmitted by the base station, in at least one RE of a part of RBs of at least one orthogonal frequency division multiplexing (OFDM) symbol in each of the other downlink subframes.

Optionally, before receiving the pilot signal, which is transmitted by the base station, in the fourth downlink subframe, the following may be included: an operation or a step of receiving a second signaling transmitted by the base station, where the second signaling includes the transmit period and the subframe offset number.

Optionally, before determining the fourth downlink subframe for receiving the pilot signal according to the preset transmit period and the subframe offset number, the following can be included: an operation or a step of transmitting a feature group indicator (FGI) bit or a third signaling to the base station, where the FGI bit or the third signaling includes a capability identifier indicating that transmitting a pilot signal periodically by the base station is supported.

It should be noted that, steps in the method for receiving the pilot signal according to this embodiment can be adaptable to the above corresponding method for transmitting the pilot signal by the base station, and will not be repeated herein.

In this embodiment, a UE cooperates with a base station, the UE and the base station determine a downlink subframe for transmitting a pilot signal via a preset transmitperiod and subframe offset number respectively, the base station transmits a pilot signal to the UE in the determined downlink subframe, that is, the base station transmits a pilot signal to the UE periodically, instead of transmitting a pilot signal to the UE in each subframe, and the UE receives the pilot signal in the determined downlink subframe, thus time domain resources occupied by a pilot signal are reduced, and overhead of transmitting the pilot signal is reduced.

FIG. 8 is a schematic structural diagram of a UE according to an embodiment of the present invention. As shown in FIG. 8, the UE according to this embodiment includes: a third processing module 81 and a second receiving module 82.

The third processing module 81 is configured to determine a third downlink subframe for receiving a pilot signal according to an uplink and downlink ratio relationship, where the third downlink subframe is a first downlink subframe after a transition from uplink-transmitting to downlink-receiving;

The second receiving module 82 is configured to receive the pilot signal transmitted by a base station in the third downlink subframe.

Functional modules of the UE according to this embodiment can be used to perform procedures of the method for receiving the pilot signal as shown in FIG. 6, specific operational principles thereof will not go into a detailed description.

Optionally, the second receiving module 82 may be further configured to receive the pilot signal, which is transmitted by the base station, in at least one other downlink subframe in addition to the third downlink subframe.

Optionally, the second receiving module 82 may be specifically configured to receive the pilot signal, which is transmitted by the base station, in all resource blocks (RB) or a part of RBs of the third downlink subframe.

Furthermore, the second receiving module 82 may be more specifically configured to receive the pilot signal, which is transmitted by the base station, in all RBs or a part of RBs of at least one orthogonal frequency division multiplexing (OFDM) symbol in the third downlink subframe.

For example, the second receiving module 82 may be more specifically configured to receive the pilot signal, which is transmitted by the base station, in all RBs of 1 or 4 OFDM symbols in the third downlink subframe.

Or, the second receiving module 82 may be more specifically configured to receive the pilot signal, which is transmitted by the base station, in a part of RBs of 1 or 4 OFDM symbols in the third downlink subframe.

Or, the second receiving module 82 may be more specifically configured to receive the pilot signal, which is transmitted by the base station, in all RBs of 1 OFDM symbol of the third downlink subframe, and receive the pilot signal, which is transmitted by the base station, in a part of RBs of other 3 OFDM symbols in the third downlink subframe.

Furthermore, the second receiving module 82 may be specifically configured to receive the pilot signal, which is transmitted by the base station, in all RBs or a part of RBs of at least one other downlink subframe.

The second receiving module 82 may be more specifically configured to receive the pilot signal, which is transmitted by the base station, in all RBs or a part of RBs of at least one OFDM symbol in the at least one other downlink subframe.

For example, the second receiving module 82 may be more specifically configured to receive the pilot signal, which is transmitted by the base station, in all RBs of 1 or 4 OFDM symbols in the at least one of further downlink subframes.

Or, the second receiving module 82 may be more specifically configured to receive the pilot signal, which is transmitted by the base station, in a part of RBs of 1 or 4 OFDM symbols in the at least one other downlink subframe.

Or, the second receiving module 82 may be more specifically configured to receive the pilot signal, which is transmitted by the base station, in all RBs of 1 OFDM symbol in the at least one other downlink subframe, and receive the pilot signal, which is transmitted by the base station, in a part of RBs of other 3 OFDM symbols in the at least one other downlink subframe.

Furthermore, as shown in FIG. 8, the user equipment according to this embodiment may further include: a third receiving module 83. The third receiving module 83 is configured to receive the uplink and downlink ratio relationship transmitted by the base station before the third processing module 81 determines the third downlink subframe for receiving the pilot signal according to the uplink and downlink ratio relationship.

By means of cooperating with a base station, the UE according to this embodiment and the base station determine a first downlink subframe after a transition from the uplink to the downlink according to an uplink and downlink ratio relationship respectively, the base station transmits a pilot signal to the UE in the determined first downlink subframe, instead of transmitting a pilot signal to the UE in each downlink subframe, and the UE according to this embodiment receives in the determined downlink subframe a pilot signal transmitted by the base station in the determined downlink subframe, thus time domain resources occupied by a pilot signal are reduced, and overhead of transmitting the pilot signal is reduced.

FIG. 9 is a schematic structural diagram of a UE according to another embodiment of the present invention. As shown in FIG. 9, the UE according to this embodiment includes: a fourth processing module 91 and a fourth receiving module 92.

The fourth processing module 91 is configured to determine, according to a preset transmit period and a subframe offset number, a fourth downlink subframe for receiving a pilot signal.

The fourth receiving module 92 is configured to receive the pilot signal, which is transmitted by a base station, in the fourth downlink subframe.

Functional modules of the UE according to this embodiment can be used to perform procedures of the method for receiving the pilot signal as shown in FIG. 7, specific operational principles thereof will not go into a detailed description.

Optionally, the fourth processing module 91 may be specifically configured to determine the fourth downlink subframe according to the formula (1). Reference may be made to above method embodiments for descriptions about the formula (1) and parameters therein, and will not be repeated herein.

Optionally, the transmit period and the subframe offset number are configurable. More preferably, the transmit period is 5ms; the subframe offset number is one of 0, 1, 2, 3, and 4.

The fourth receiving module 92 may be specifically configured to receive the pilot signal, which is transmitted by the base station, in all resource blocks (RB) or a part of RBs of the fourth downlink subframe.

Optionally, the fourth receiving module 92 may be further configured to receive the pilot signal, which is transmitted by the base station, in a part of RBs of other downlink subframes in addition to the fourth downlink subframe.

Furthermore, the fourth receiving module 92 is specifically configured to receive the pilot signal, which is transmitted by the base station, in at least one RE of a part of RBs of at least one orthogonal frequency division multiplexing (OFDM) symbol in each of the other downlink subframes.

Alternatively, the number of the part of RBs is configurable. Preferably, the number of the part of RBs is 25 or 10 or 6.

Furthermore, the fourth receiving module 92 may be further configured to receive a first signaling transmitted by the base station, where the first signaling includes the number of the part of RBs.

Further, the fourth receiving module 92 may be more specifically configured to receive the pilot signal, which is transmitted by the base station, in all RBs or a part of RBs of at least one OFDM symbol in the fourth downlink subframe.

For example, the fourth receiving module 92 is more specifically configured to receive the pilot signal, which is transmitted by the base station, in all RBs of 1 or 4 OFDM symbols in the fourth downlink subframe.

For example, the fourth receiving module 92 is more specifically configured to receive the pilot signal, which is transmitted by the base station, in a part of RBs of 1 or 4 OFDM symbols in the fourth downlink subframe.

For example, the fourth receiving module 92 is more specifically configured to receive the pilot signal, which is transmitted by the base station, in all RBs of 1 OFDM symbol in the fourth downlink subframe, and receive the pilot signal, which is transmitted by the base station, in a part of RBs of other 3 OFDM symbols in the fourth downlink subframe.

Optionally, the fourth receiving module 92 may be further configured to receive a second signaling transmitted by the base station, where the second signaling includes the transmit period and the subframe offset number.

Furthermore, as shown in FIG. 9, the user equipment according to this embodiment may further include: a third transmitting module 93. The third transmitting module 93 is connected to the fourth processing module 91, and is configured to transmit a feature group indicator (FGI) bit or a third signaling to the base station before the fourth processing module 91 determines the fourth downlink subframe for receiving the pilot signal according to the preset transmit period and the subframe offset number, where the FGI bit or the third signaling includes a capability identifier indicating that transmitting a pilot signal periodically by the base station is supported.

The UE according to this embodiment cooperates with a base station, the UE and the base station determine a downlink subframe for transmitting a pilot signal via a preset transmit period and subframe offset number respectively, the base station transmits a pilot signal to the UE in the determined downlink subframe, that is, the base station transmits a pilot signal to the UE periodically, instead of transmitting a pilot signal to the UE in each subframe, and the UE receives in the determined downlink subframe the pilot signal transmitted by the base station in the determined downlink subframe, thus time domain resources occupied by a pilot signal are reduced, and overhead of transmitting the pilot signal is reduced

Persons skilled in the art can understand that all or a part of the steps of the methods according to embodiments of the present invention may be implemented by a program instructing relevant hardware, where, the program may be stored in a computer readable storage medium. When the program runs, the steps of the methods according to the foregoing embodiments are performed; the storage medium described above includes: the media of an ROM, an RAM, a disk, or a CD, and the like, which may store a program code.

Finally, it should be noted: the foregoing embodiments are merely used to illustrate the technical solutions of the present invention, and should not be considered as a limitation thereof; although detailed descriptions are given to the present invention with reference to the foregoing embodiments, persons of ordinary skill in the art should understand: they can still make modifications to the technical solutions recited in each individual embodiment described above, or make equivalent replacements to all or a part of technical features; while these modifications or replacements do not make the nature of corresponding technical solutions depart from the scope of embodiments of the present invention.

**Claims**

1. A method for transmitting a pilot signal, comprising:

determining a first downlink subframe for transmitting a pilot signal according to an uplink and downlink ratio relationship, wherein the first downlink subframe is a first downlink subframe after a transition from uplink-receiving to downlink-transmitting; and

transmitting the pilot signal to a user equipment (UE) in the first downlink subframe.

2. The method for transmitting the pilot signal according to claim 1, further comprising:

   transmitting the pilot signal to the UE in at least one other downlink subframe in addition to the first downlink subframe.

3. The method for transmitting the pilot signal according to claim 1 or 2, wherein, the transmitting the pilot signal to the UE in the first downlink subframe comprises:

   transmitting the pilot signal to the UE in all resource blocks (RB) or a part of RBs of the first downlink subframe.

4. The method for transmitting the pilot signal according to claim 3, wherein, the transmitting the pilot signal to the UE in all the RBs or the part of RBs of the first downlink subframe comprises:

   transmitting the pilot signal to the UE in all RBs or a part of RBs of at least one orthogonal frequency division multiplexing (OFDM) symbol in the first downlink subframe.

5. The method for transmitting the pilot signal according to claim 4, wherein, the transmitting the pilot signal to the UE in all the RBs or the part of RBs of the at least one OFDM symbol in the first downlink subframe comprises:

   transmitting the pilot signal to the UE in all RBs of 1 or 4 OFDM symbols in the first downlink subframe; or
   transmitting the pilot signal to the UE in a part of RBs of 1 or 4 OFDM symbols in the first downlink subframe; or
   transmitting the pilot signal to the UE in all RBs of 1 OFDM symbol in the first downlink subframe, and transmitting the pilot signal to the UE in a part of RBs of other 3 OFDM symbols in the first downlink subframe.

6. The method for transmitting the pilot signal according to any one of claims 2 to 5, wherein, the transmitting the pilot signal to the UE in the at least one other downlink subframe in addition to the first downlink subframe comprises:

   transmitting the pilot signal to the UE in all RBs or a part of RBs of the at least one other downlink subframe.

7. The method for transmitting the pilot signal according to claim 6, wherein, the transmitting the pilot signal to the UE in all the RBs or the part of RBs of the at least one other downlink subframe comprises:

   transmitting the pilot signal to the UE in all RBs or a part of RBs of at least one OFDM symbol in the at least one other downlink subframe.

8. The method for transmitting the pilot signal according to claim 7, wherein, the transmitting the pilot signal to the UE in all the RBs or the part of RBs of at least one OFDM symbol in the at least one other downlink subframe comprises:

   transmitting the pilot signal to the UE in all RBs of 1 or 4 OFDM symbols in the at least one other downlink subframe; or
   transmitting the pilot signal to the UE in a part of RBs of 1 or 4 OFDM symbols in the at least one other downlink subframe; or
   transmitting the pilot signal to the UE in all RBs of 1 OFDM symbol in the at least one other downlink subframe, and transmitting the pilot signal to the UE in a part of RBs of other 3 OFDM symbols in the at least one other downlink subframe.

9. The method for transmitting the pilot signal according to any one of claims 1 to 8, wherein, before the determining the first downlink subframe for transmitting the pilot signal according to the uplink and downlink ratio relationship, comprising:

   configuring the uplink and downlink ratio relationship.

10. A method for transmitting a pilot signal, comprising:

    determining, according to a preset transmit period and a subframe offset number, a second downlink subframe for transmitting a pilot signal;
transmitting the pilot signal to a user equipment (UE) in the second downlink subframe.

11. The method for transmitting the pilot signal according to claim 10, wherein, the determining, according to the preset transmit period and the subframe offset number, the second downlink subframe for transmitting the pilot signal comprises:

determining the second downlink subframe according to the formula which is $10 \times n_f + \lfloor n_s /2 \rfloor - N_{OFFSET.RS}$)mod $N_{RS} = 0$;
wherein, $n_f$ is a system frame number;
$n_s$ is a time slot number within the subframe;
$N_{OFFSET.RS}$ is the subframe offset number;
$N_{RS}$ is the transmit period;
mod is a modulo operation.

12. The method for transmitting the pilot signal according to claim 11, wherein, the transmit period and the subframe offset number are configurable.

13. The method for transmitting the pilot signal according to claim 11 or 12, wherein, the transmit period is 5ms; the subframe offset number is one of 0, 1, 2, 3, and 4.

14. The method for transmitting the pilot signal according to any one of claims 10 to 13, wherein, the transmitting the pilot signal to the UE in the second downlink subframe comprises:

transmitting the pilot signal to the UE in all resource blocks (RB) or a part of RBs of the second downlink subframe.

15. The method for transmitting the pilot signal according to claim 14, further comprising:

transmitting the pilot signal to the UE in a part of RBs of other downlink subframe in addition to the second downlink subframe.

16. The method for transmitting the pilot signal according to claim 15, wherein, the transmitting the pilot signal to the UE in the part of RBs of the other downlink subframe in addition to the second downlink subframe comprises:

transmitting the pilot signal to the UE in at least one RE of a part of RBs of at least one orthogonal frequency division multiplexing (OFDM) symbol in each of the other downlink subframes.

17. The method for transmitting the pilot signal according to claim 15 or 16, wherein, the number of the part of RBs is configurable.

18. The method for transmitting the pilot signal according to any one of claims 15 to 17, wherein, the number of the part of RBs is 25 or 10 or 6.

19. The method for transmitting the pilot signal according to any one of claims 15 to 18, wherein, before the transmitting the pilot signal to the UE in the part of RBs of the other downlink subframe in addition to the second downlink subframe, comprising:

transmitting a first signaling to the UE, wherein the first signaling comprises the number of the part of RBs.

20. The method for transmitting the pilot signal according to any one of claims 14 to 19, wherein, the transmitting the pilot signal to the UE in all the resource blocks (RB) or the part of RBs of the second downlink subframe comprises:

transmitting the pilot signal to the UE in all RBs or a part of RBs of at least one OFDM symbol of the second downlink subframe.

21. The method for transmitting the pilot signal according to claim 20, wherein, the transmitting the pilot signal to the UE in all the RBs or the part of RBs of the at least one OFDM symbol in the second downlink subframe comprises:

transmitting the pilot signal to the UE in all RBs of 1 or 4 OFDM symbols in the second downlink subframe; or transmitting the pilot signal to the UE in a part of RBs of 1 or 4 OFDM symbols in the second downlink subframe; or transmitting the pilot signal to the UE in all RBs of 1 OFDM symbol in the second downlink subframe, and transmitting the pilot signal to the UE in a part of RBs of other 3 OFDM symbols in the second downlink subframe.

22. The method for transmitting the pilot signal according to any one of claims 10 to 21, wherein, before the transmitting the pilot signal to the UE in the second downlink subframe, comprising:

transmitting a second signaling to the UE, wherein the second signaling comprises the transmit period and the subframe offset number.

23. The method for transmitting the pilot signal according to any one of claims 10 to 22, wherein, before the determining the second downlink subframe for transmitting the pilot signal according to the preset transmit period and the subframe offset number, comprising:

receiving a feature group indicator (FGI) bit or a third signaling transmitted by the UE, wherein the FGI bit or the third signaling comprises a capability identifier indicating that the UE supports to transmit a pilot signal periodically.

24. Abase station, comprising:

a first processing module, configured to determine a first downlink subframe for transmitting a pilot signal according to an uplink and downlink ratio relationship, wherein the first downlink subframe is a first downlink subframe after a transition from uplink-receiving to downlink-transmitting; and
a first transmitting module, configured to transmit the pilot signal to a user equipment (UE) in the first downlink subframe.

25. The base station according to claim 24, wherein, the first transmitting module is further configured to transmit the pilot signal to the UE in at least one other downlink subframe in addition to the first downlink subframe.

26. The base station according to claim 24 or 25, wherein, the first transmitting module is specifically configured to transmit the pilot signal to the UE in all resource blocks (RB) or a part of RBs of the first downlink subframe.

27. The base station according to claim 26, wherein, the first transmitting module is more specifically configured to transmit the pilot signal to the UE in all RBs or a part of RBs of at least one orthogonal frequency division multiplexing (OFDM) symbol in the first downlink subframe.

28. The base station according to claim 27, wherein, the first transmitting module is more specifically configured to transmit the pilot signal to the UE in all RBs of 1 or 4 OFDM symbols in the first downlink subframe; or
the first transmitting module is more specifically configured to transmit the pilot signal to the UE in a part of RBs of 1 or 4 OFDM symbols in the first downlink subframe; or
the first transmitting module is more specifically configured to transmit the pilot signal to the UE in all RBs of 1 OFDM symbol in the first downlink subframe, and transmit the pilot signal to the UE in a part of RBs of other 3 OFDM symbols in the first downlink subframe.

29. The base station according to any one of claims 25 to 28, wherein, the first transmitting module is specifically configured to transmit the pilot signal to the UE in all RBs or a part of RBs of the at least one other downlink subframe.

30. The base station according to claim 29, wherein, the first transmitting module is more specifically configured to transmit the pilot signal to the UE in all RBs or a part of RBs of at least one OFDM symbol in the at least one other downlink subframe.

31. The base station according to claim 30, wherein, the first transmitting module is more specifically configured to transmit the pilot signal to the UE in all RBs of 1 or 4 OFDM symbols in the at least one other downlink subframe; or
the first transmitting module is more specifically configured to transmit the pilot signal to the UE in a part of RBs of 1 or 4 OFDM symbols in the at least one other downlink subframe; or
the first transmitting module is more specifically configured to transmit the pilot signal to the UE in all RBs of 1 OFDM symbol in the at least one other downlink subframe, and transmit the pilot signal to the UE in a part of RBs of other 3 OFDM symbols in the at least one other downlink subframe.

32. The base station according to any one of claims 24 to 31, further comprising:

a configuration module, configured to configure the uplink and downlink ratio relationship.

33. A base station, comprising:

a second processing module, configured to determine, according to a preset transmit period and a subframe offset number, a second downlink subframe for transmitting a pilot signal;
a second transmitting module, configured to transmit the pilot signal to a user equipment (UE) in the second downlink subframe.

34. The base station according to claim 33, wherein,
the second processing module is specifically configured to determine the second downlink subframe according to the formula which is $10 \times n_f + \lfloor n_s/2 \rfloor - N_{OFFSET.RS}) \bmod N_{RS} = 0$;
wherein, $n_f$ is a system frame number;
$n_s$ is a time slot number within the subframe;
$N_{OFFSET.RS}$ is the subframe offset number;
$N_{RS}$ is the transmit period;
mod is a modulo operation.

35. The base station according to claim 34, wherein, the transmit period and the subframe offset number are configurable.

36. The base station according to claim 34 or 35, wherein, the transmit period is 5ms; the subframe offset number is one of 0, 1, 2, 3, and 4.

37. The base station according to any one of claims 33 to 36, wherein, the second transmitting module is specifically configured to transmit the pilot signal to the UE in all resource blocks (RB) or a part of RBs of the second downlink subframe.

38. The base station according to claim 37, wherein, the second transmitting module is further configured to transmit the pilot signal to the UE in a part of RBs of other downlink subframe in addition to the second downlink subframe.

39. The base station according to claim 38, wherein, the second transmitting module is specifically configured to transmit the pilot signal to the UE in at least one RE of a part of RBs of at least one orthogonal frequency division multiplexing (OFDM) symbol in each of the other downlink subframes.

40. The base station according to claim 38 or 39, wherein, the number of the part of RBs is configurable.

41. The base station according to any one of claims 38 to 40, wherein, the number of the part of RBs is 25 or 10 or 6.

42. The base station according to any one of claims 38 to 41, wherein, the second transmitting module is further configured to, before transmitting the pilot signal to the UE in the part of RBs of the other downlink subframe in addition to the second downlink subframe, transmit a first signaling to the UE, wherein the first signaling comprises the number of the part of RBs.

43. The base station according to any one of claims 37 to 42, wherein, the second transmitting module is specifically configured to transmit the pilot signal to the UE on all RBs or a part of RBs of at least one OFDM symbol of the second downlink subframe.

44. The base station according to claim 43, wherein, the second transmitting module is more specifically configured to transmit the pilot signal to the UE in all RBs of 1 or 4 OFDM symbols in the second downlink subframe; or
the second transmitting module is more specifically configured to transmit the pilot signal to the UE in a part of RBs of 1 or 4 OFDM symbols in the second downlink subframe; or
the second transmitting module is more specifically configured to transmit the pilot signal to the UE in all RBs of 1 OFDM symbol in the second downlink subframe, and transmit the pilot signal to the UE in a part of RBs of other 3 OFDM symbols in the second downlink subframe.

**45.** The base station according to any one of claims 33 to 44, wherein, the second transmitting module is further configured to, before transmitting the pilot signal to the UE in the second downlink subframe, transmit a second signaling to the UE, wherein the second signaling comprises the transmit period and the subframe offset number.

**46.** The base station according to any one of claims 33 to 45, further comprising:

a first receiving module, configured to receive a feature group indicator (FGI) bit or a third signaling transmitted by the UE before the second processing module determines the second downlink subframe for transmitting the pilot signal according to the preset transmit period and the subframe offset number, wherein the FGI bit or the third signaling comprises a capability identifier indicating that the UE supports to transmit a pilot signal periodically.

**47.** A method for receiving a pilot signal, comprising:

determining a third downlink subframe for receiving a pilot signal according to an uplink and downlink ratio relationship, wherein the third downlink subframe is a first downlink subframe after a transition from uplink-transmitting to downlink-receiving;
receiving the pilot signal, which is transmitted by a base station, in the third downlink subframe.

**48.** The method for receiving the pilot signal according to claim 47, further comprising:

receiving the pilot signal, which is transmitted by the base station, in at least one other downlink subframe in addition to the third downlink subframe.

**49.** The method for receiving the pilot signal according to claim 47 or 48, wherein, the receiving the pilot signal, which is transmitted by the base station, in the third downlink subframe comprises:

receiving the pilot signal, which is transmitted by the base station, in all resource blocks (RB) or a part of RBs of the third downlink subframe.

**50.** The method for receiving the pilot signal according to claim 49, wherein, the receiving the pilot signal, which is transmitted by the base station, in all the RBs or the part of RBs of the third downlink subframe comprises:

receiving the pilot signal, which is transmitted by the base station, in all RBs or a part of RBs of at least one orthogonal frequency division multiplexing (OFDM) symbol in the third downlink subframe.

**51.** The method for receiving the pilot signal according to claim 50, wherein, the receiving the pilot signal, which is transmitted by the base station, in all the RBs or the part of RBs of the at least one orthogonal frequency division multiplexing (OFDM) symbol in the third downlink subframe comprises:

receiving the pilot signal, which is transmitted by the base station, in all RBs of 1 or 4 OFDM symbols in the third downlink subframe; or
receiving the pilot signal, which is transmitted by the base station, in a part of RBs of 1 or 4 OFDM symbols in the third downlink subframe; or
receiving the pilot signal, which is transmitted by the base station, in all RBs of 1 OFDM symbol in the third downlink subframe, and receiving the pilot signal, which is transmitted by the base station, in a part of RBs of other 3 OFDM symbols in the third downlink subframe.

**52.** The method for receiving the pilot signal according to any one of claims 48 to 51, wherein, the receiving the pilot signal, which is transmitted by the base station, in the at least one other downlink subframe in addition to the third downlink subframe comprises:

receiving the pilot signal, which is transmitted by the base station, in all RBs or a part of RBs of the at least one other downlink subframe.

**53.** The method for receiving the pilot signal according to claim 52, wherein, the receiving the pilot signal, which is transmitted by the base station, in all the RBs or the part of RBs of the at least one other downlink subframe comprises:

receiving the pilot signal, which is transmitted by the base station, in all RBs or a part of RBs of at least one OFDM symbol in the at least one other downlink subframe.

54. The method for receiving the pilot signal according to claim 53, wherein, the receiving the pilot signal, which is transmitted by the base station, in all the RBs or the part of RBs of at least one OFDM symbol in the at least one other downlink subframe comprises:

receiving the pilot signal, which is transmitted by the base station, in all RBs of 1 or 4 OFDM symbols of the at least one other downlink subframe; or

receiving the pilot signal, which is transmitted by the base station, in a part of RBs of 1 or 4 OFDM symbols in the at least one other downlink subframe; or

receiving the pilot signal, which is transmitted by the base station, in all RBs of 1 OFDM symbol of the at least one other downlink subframe, and receiving the pilot signal, which is transmitted by the base station, in a part of RBs of other 3 OFDM symbols in the at least one other downlink subframe.

55. The method for receiving the pilot signal according to any one of claims 47 to 54, wherein, before the determining the third downlink subframe for receiving the pilot signal according to the uplink and downlink ratio relationship, comprising:

receiving the uplink and downlink ratio relationship transmitted by the base station.

56. A method for receiving a pilot signal, comprising:

determining, according to a preset transmit period and a subframe offset number, a fourth downlink subframe for receiving a pilot signal; and

receiving the pilot signal, which is transmitted by a base station, in the fourth downlink subframe.

57. The method for receiving the pilot signal according to claim 56, wherein, the determining, according to the preset transmit period and the subframe offset number, the fourth downlink subframe for receiving the pilot signal comprises:

determining the fourth downlink subframe according to the formula which is $10 \times n_f + \lfloor n_s/2 \rfloor - N_{OFFSET.RS}) \mod N_{RS} = 0$;

wherein, $n_f$ is a system frame number;

$n_s$ is a time slot number within the subframe;

$N_{OFFSET.RS}$ is the subframe offset number;

$N_{RS}$ is the transmit period;

mod is a modulo operation.

58. The method for receiving the pilot signal according to claim 57, wherein, the transmit period and the subframe offset number are configurable.

59. The method for transmitting the pilot signal according to claim 57 or 58, wherein, the transmit period is 5ms; the subframe offset number is one of 0, 1, 2, 3, and 4.

60. The method for transmitting the pilot signal according to any one of claims 56 to 59, wherein, the receiving the pilot signal, which is transmitted by the base station, in the fourth downlink subframe comprises:

receiving the pilot signal, which is transmitted by the base station, in all resource blocks (RB) or a part of RBs of the fourth downlink subframe.

61. The method for transmitting the pilot signal according to claim 60, further comprising:

receiving the pilot signal, which is transmitted by the base station, in a part of RBs of other downlink subframe in addition to the fourth downlink subframe.

62. The method for transmitting the pilot signal according to claim 61, wherein, the receiving the pilot signal, which is transmitted by the base station, in the part of RBs of the other downlink subframe in addition to the fourth downlink subframe comprises:

receiving the pilot signal, which is transmitted by the base station, in at least one RE of a part of RBs of at least one orthogonal frequency division multiplexing (OFDM) symbol in each of the other downlink subframes.

63. The method for transmitting the pilot signal according to claim 61 or 62, wherein, the number of the part of RBs is configurable.

64. The method for transmitting the pilot signal according to any one of claims 61 to 63, wherein, the number of the part of RBs is 25 or 10 or 6.

65. The method for transmitting the pilot signal according to any one of claims 61 to 64, wherein, before the receiving the pilot signal, which is transmitted by the base station, in the part of RBs of the other downlink subframe in addition to the fourth downlink subframe, comprising:

   receiving a first signaling transmitted by the base station, wherein the first signaling comprises the number of the part of RBs.

66. The method for transmitting the pilot signal according to any one of claims 60 to 65, wherein, the receiving the pilot signal, which is transmitted by the base station, in all the resource blocks (RB) or the part of RBs of the fourth downlink subframe comprises:

   receiving the pilot signal, which is transmitted by the base station, in all RBs or a part of RBs of at least one OFDM symbol in the fourth downlink subframe.

67. The method for transmitting the pilot signal according to claim 66, wherein, the receiving the pilot signal, which is transmitted by the base station, in all the RBs or the part of RBs of the at least one OFDM symbol in the fourth downlink subframe comprises:

   receiving the pilot signal, which is transmitted by the base station, in all RBs of 1 or 4 OFDM symbols in the fourth downlink subframe; or
   receiving the pilot signal, which is transmitted by the base station, in a part of RBs of 1 or 4 OFDM symbols in the fourth downlink subframe; or
   receiving the pilot signal, which is transmitted by the base station, in all RBs of 1 OFDM symbol in the fourth downlink subframe, and receiving the pilot signal, which is transmitted by the base station, in a part of RBs of other 3 OFDM symbols in the fourth downlink subframe.

68. The method for transmitting the pilot signal according to any one of claims 56 to 67, wherein, before the receiving the pilot signal, which is transmitted by the base station, in the fourth downlink subframe, comprising:

   receiving a second signaling transmitted by the base station, wherein the second signaling comprises the transmit period and the subframe offset number.

69. The method for transmitting the pilot signal according to any one of claims 56 to 68, wherein, before the determining, according to the preset transmit period and the subframe offset number, the fourth downlink subframe for receiving the pilot signal, comprising:

   transmitting a feature group indicator (FGI) bit or a third signaling to the base station, wherein the FGI bit or the third signaling comprises a capability identifier indicating that transmitting a pilot signal periodically by the base station is supported.

70. A user equipment, comprising:

   a third processing module, configured to determine a third downlink subframe for receiving a pilot signal according to an uplink and downlink ratio relationship, wherein the third downlink subframe is a first downlink subframe after a transition from uplink-transmitting to downlink-receiving; and
   a second receiving module, configured to receive the pilot signal, which is transmitted by a base station, in the third downlink subframe.

71. The user equipment according to claim 70, wherein, the second receiving module is further configured to receive the pilot signal, which is transmitted by the base station, in at least one other downlink subframe in addition to the third downlink subframe.

72. The user equipment according to claim 70 or 71, wherein, the second receiving module is specifically configured to receive the pilot signal, which is transmitted by the base station, in all resource blocks (RB) or a part of RBs of the third downlink subframe.

73. The user equipment according to claim 72, wherein, the second receiving module is more specifically configured to receive the pilot signal, which is transmitted by the base station, in all RBs or a part of RBs of at least one orthogonal frequency division multiplexing (OFDM) symbol in the third downlink subframe.

74. The user equipment according to claim 73, wherein, the second receiving module is more specifically configured to receive the pilot signal, which is transmitted by the base station, in all RBs of 1 or 4 OFDM symbols in the third downlink subframe; or
the second receiving module is more specifically configured to receive the pilot signal, which is transmitted by the base station, in a part of RBs of 1 or 4 OFDM symbols in the third downlink subframe; or
the second receiving module is more specifically configured to receive the pilot signal, which is transmitted by the base station, in all RBs of 1 OFDM symbol in the third downlink subframe, and receive the pilot signal, which is transmitted by the base station, in a part of RBs of other 3 OFDM symbols in the third downlink subframe.

75. The user equipment according to any one of claims 71 to 74, wherein, the second receiving module is specifically configured to receive the pilot signal, which is transmitted by the base station, in all RBs or a part of RBs in the at least one other downlink subframe.

76. The user equipment according to claim 75, wherein, the second receiving module is more specifically configured to receive the pilot signal, which is transmitted by the base station, in all RBs or a part of RBs of at least one OFDM symbol in the at least one other downlink subframe.

77. The user equipment according to claim 76, wherein, the second receiving module is more specifically configured to receive the pilot signal, which is transmitted by the base station, in all RBs of 1 or 4 OFDM symbols in the at least one other downlink subframe; or
the second receiving module is more specifically configured to receive the pilot signal, which is transmitted by the base station, in a part of RBs of 1 or 4 OFDM symbols in the at least one other downlink subframe; or
the second receiving module is more specifically configured to receive the pilot signal, which is transmitted by the base station, in all RBs of 1 OFDM symbol in the at least one other downlink subframe, and receive the pilot signal, which is transmitted by the base station, in a part of RBs of other 3 OFDM symbols in the at least one other downlink subframe.

78. The user equipment according to any one of claims 70 to 77, wherein, further comprising:

a third receiving module, configured to receive the uplink and downlink ratio relationship transmitted by the base station.

79. A user equipment, comprising:

a fourth processing module, configured to determine, according to a preset transmit period and a subframe offset number, a fourth downlink subframe for receiving a pilot signal; and
a fourth receiving module, configured to receive the pilot signal, which is transmitted by a base station, in the fourth downlink subframe.

80. The user equipment according to claim 79, wherein, the fourth processing module is specifically configured to determine the fourth downlink subframe according to the formula which is $10 \times n_f + \lfloor n_s/2 \rfloor - N_{OFFSET.RS}) \bmod N_{RS} = 0$;
wherein, $n_f$ is a system frame number;
$n_s$ is a time slot number within the subframe;
$N_{OFFSET.RS}$ is the subframe offset number;
$N_{RS}$ is the transmit period;
mod is a modulo operation.

81. The user equipment according to claim 80, wherein, the transmit period and the subframe offset number are configurable.

82. The user equipment according to claim 80 or 81, wherein, the transmit period is 5ms; the subframe offset number is one of 0, 1, 2, 3, and 4.

83. The user equipment according to any one of claims 80 to 82, wherein, the fourth receiving module is specifically configured to receive the pilot signal, which is transmitted by the base station, in all resource blocks (RB) or a part of RBs in the fourth downlink subframe.

84. The user equipment according to claim 83, wherein, the fourth receiving module is further configured to receive the pilot signal, which is transmitted by the base station, in a part of RBs of other downlink subframe in addition to the fourth downlink subframe.

85. The user equipment according to claim 84, wherein, the fourth receiving module is specifically configured to receive the pilot signal, which is transmitted by the base station, in at least one RE of a part of RBs of at least one orthogonal frequency division multiplexing (OFDM) symbol in each of the other downlink subframes.

86. The user equipment according to claim 84 or 85, wherein, the number of the part of RBs is configurable.

87. The user equipment according to any one of claims 84 to 86, wherein, the number of the part of RBs is 25 or 10 or 6.

88. The user equipment according to any one of claims 84 to 87, wherein, the fourth receiving module is further configured to receive a first signaling transmitted by the base station, wherein the first signaling comprises the number of the part of RBs.

89. The user equipment according to any one of claims 83 to 88, wherein, the fourth receiving module is more specifically configured to receive the pilot signal, which is transmitted by the base station, in all RBs or a part of RBs of at least one OFDM symbol in the fourth downlink subframe.

90. The user equipment according to claim 89, wherein, the fourth receiving module is more specifically configured to receive the pilot signal, which is transmitted by the base station, in all RBs of 1 or 4 OFDM symbols of the fourth downlink subframe; or
the fourth receiving module is more specifically configured to receive the pilot signal, which is transmitted by the base station, in a part of RBs of 1 or 4 OFDM symbols of the fourth downlink subframe; or
the fourth receiving module is more specifically configured to receive the pilot signal, which is transmitted by the base station, in all RBs of 1 OFDM symbol of the fourth downlink subframe, and receive the pilot signal, which is transmitted by the base station, in a part of RBs of other 3 OFDM symbols in the fourth downlink subframe.

91. The user equipment according to any one of claims 79 to 90, wherein, the fourth receiving module is further configured to receive a second signaling transmitted by the base station, wherein the second signaling comprises the transmit period and the subframe offset number.

92. The user equipment according to any one of claims 79 to 91, further comprising:

a third transmitting module, configured to transmit a feature group indicator (FGI) bit or a third signaling to the base station, wherein the FGI bit or the third signaling comprises a capability identifier indicating that transmitting a pilot signal periodically by the base station is supported.

determining a first downlink subframe for transmitting a pilot signal according to an uplink and downlink ratio relationship, where the first downlink subframe is a first downlink subframe after a transition from uplink-receiving to downlink-transmitting    101

transmitting the pilot signal to a UE in the first downlink subframe    102

FIG. 1

determining, according to a preset transmit period and a subframe offset number, a second downlink subframe for transmitting a pilot signal    201

transmitting the pilot signal to a UE in the second downlink subframe    202

FIG. 2

FIG. 3A

FIG. 3B

50RBs  6RBs

P
P
P
P
P
P

.........        .........        .........

P
P
P
P — Center
P
P

.........        .........        .........

P
P
P
P
P
P

FIG. 3C

FIG. 3D

50RBs    6RBs    Center

FIG. 3E

41
42

| first processing module | — | first transmitting module |

43

| configuration module |

FIG. 4

51
52

| second processing module | — | second transmitting module |

53

| first receiving module |

FIG. 5

| determining a third downlink subframe for receiving a pilot signal according to an uplink and downlink ratio relationship, where the third downlink subframe is a first downlink subframe after a transition from uplink-transmitting to downlink-receiving | 601 |

↓

| receiving the pilot signal, which is transmitted by a base station, in the third downlink subframe | 602 |

FIG. 6

determining, according to a preset transmit period and a subframe offset number, a fourth downlink subframe for receiving a pilot signal — 701

receiving the pilot signal, which is transmitted by a base station, in the fourth downlink subframe — 702

**FIG. 7**

81 third processing module

82 second receiving module

83 third receiving module

**FIG. 8**

91 fourth processing module

92 fourth receiving module

93 third transmitting module

**FIG. 9**

| | | International application No. |
|---|---|---|
| | **INTERNATIONAL SEARCH REPORT** | PCT/CN2012/074465 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04W; H04L; H04B

Documentation searched other than minimum documentation to the extent that such documents are included in the fields searched

Electronic data base consulted during the international search (name of data base and, where practicable, search terms used)

CPRSABS, CNTXT, CNKI, VEN: pilot, reference s signal, transmi+, receiv+, CRS, DMRS, subframe, UL, DL, configurat+, ratio

**C. DOCUMENTS CONSIDERED TO BE RELEVANT**

| Category* | Citation of document, with indication, where appropriate, of the relevant passages | Relevant to claim No. |
|---|---|---|
| X | CN 102340379 A (CHINA MOBILE COMMUNICATION CORP.) 01 February 2012 (01.02.2012) see description, paragraphs [0058]-[0122] | 1-3, 6, 9, 24-26, 29, 32, 47-49, 52, 55, 70-72, 75, 78 |
| Y | the same as above | 4-5, 7-8, 27-28, 30-31, 50-51, 53-54, 73-74, 76-77 |
| Y | CN 101841354 A (DATANG MOBILE COMMUNICATION EQUIP CO., LTD.) 22 September 2010 (22.09.2010) see description, paragraphs [0051]-[0056] | 4-5, 7-8, 27-28, 30-31, 50-51, 53-54, 73-74, 76-77 |
| A | CN 102281635 A (INST TELECOM SCI&TECHNOLOGY MIN O) 14 December 2011 (14.12.2011) see the whole document | 1-9, 24-32, 47-55, 70-78 |
| A | CN 101883383 A (ZTE CORP.) 10 November 2010 (10.11.2010) see the whole document | 1-9, 24-32, 47-55, 70-78 |
| A | CN 101888636 A (DATANG MOBILE COMMUNICATION EQUIP CO LTD) 17 November 2010 (17.11.2010) see the whole document | 1-9, 24-32, 47-55, 70-78 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 January 2013 (10.01.2013) | 31 January 2013 (31.01.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHU, Dan Telephone No. (86-10)62411438 |
|---|---|

Form PCT/ISA /210 (second sheet) (July 2009)

## INTERNATIONAL SEARCH REPORT

International application No.

PCT/CN2012/074465

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
    because they relate to subject matter not required to be searched by this Authority, namely:

2. ☐  Claims Nos.:
    because they relate to parts of the international application that do not comply with the prescribed requirements to such an
    extent that no meaningful international search can be carried out, specifically:

3. ☐  Claims Nos.:
    because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

Multiple inventions are found in the present international application by the current international searching authority: (1) Determining the downlink sub-frame for transmitting or receiving pilot frequency signal according to the ratio of the uplink and the downlink (corresponding to independent claims 1, 24, 47 and 70); (2) Determining the downlink sub-frame for transmitting or receiving pilot frequency signal according to the predetermined transmission cycle and the sub-frame offset number (corresponding to independent claims 10, 33, 56 and 79). The same technical feature of the claim groups (1) and (2) is just that: transmitting or receiving pilot frequency signal on the determined downlink sub-frame. However, the above-mentioned technical feature is the common knowledge in the art. Thus the two groups of claims do not have the same or corresponding special technical feature, and can not form a single general inventive concept. The two groups of claims do not satisfy the requirement of unity of invention, and do not satisfy the criteria set out in PCT Rule 13.1.

1. ☐  As all required additional search fees were timely paid by the applicant, this international search report covers all searchable
    claims.

2. ☐  As all searchable claims could be searched without effort justifying additional fees, this Authority did not invite payment
    of additional fees.

3. ☐  As only some of the required additional search fees were timely paid by the applicant, this international search report covers
    only those claims for which fees were paid, specifically claims Nos.:

4. ☒  No required additional search fees were timely paid by the applicant. Consequently, this international search report is restricted
    to the invention first mentioned in the claims; it is covered by claims Nos.: 1-9, 24-32, 47-55, 70-78.

**Remark on protest**     ☐   The additional search fees were accompanied by the applicant's protest and, where applicable, the
                              payment of a protest fee.

                          ☐   The additional search fees were accompanied by the applicant's protest but the applicable protest fee
                              was not paid within the time limit specified in the invitation.

                          ☐   No protest accompanied the payment of additional search fees.

Form PCT/ISA /210 (continuation of first sheet (2)) (July 2009)

**INTERNATIONAL SEARCH REPORT**
Information on patent family members

| | International application No. |
|---|---|
| | PCT/CN2012/074465 |

| Patent Documents referred in the Report | Publication Date | Patent Family | Publication Date |
|---|---|---|---|
| CN 102340379 A | 01.02.2012 | WO 2012006931 A1 | 19.01.2012 |
| CN 101841354 A | 22.09.2010 | None | |
| CN 102281635 A | 14.12.2011 | None | |
| CN 101883383 A | 10.11.2010 | WO 2010127637 A1 | 11.11.2010 |
| | | CN 101882943 A | 10.11.2010 |
| | | US 2012051331 A1 | 01.03.2012 |
| CN 101888636 A | 17.11.2010 | WO 2010130209 A1 | 18.11.2010 |
| | | US 2012113852 A1 | 10.05.2012 |
| | | EP 2432182 A1 | 21.03.2012 |
| | | KR 20120024775 A | 14.03.2012 |
| | | MX 2011012163 A | 29.02.2012 |
| | | JP 2012527136 W | 01.11.2012 |

Form PCT/ISA/210 (patent family annex) (July 2009)

**INTERNATIONAL SEARCH REPORT**

| International application No. |
|---|
| PCT/CN2012/074465 |

**A. CLASSIFICATION OF SUBJECT MATTER**

H04W 72/04 (2009.01) i

H04W 24/02 (2009.01) i

Form PCT/ISA /210 (extra sheet) (July 2009)